(19) Europäisches Patentamt
European Patent Office
Office européen des brevets

(11) **EP 2 746 724 B1**

(12) **EUROPEAN PATENT SPECIFICATION**

(45) Date of publication and mention
of the grant of the patent:
**22.02.2017 Bulletin 2017/08**

(51) Int Cl.:
***G01C 19/5747*** *(2012.01)*

(21) Application number: **12290455.0**

(22) Date of filing: **20.12.2012**

(54) **Micromechanical gyroscope**

Mikromechanisches Gyroskop

Gyroscope micromécanique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.06.2014 Bulletin 2014/26**

(73) Proprietor: **Tronics Microsystems S.A.
38920 Crolles (FR)**

(72) Inventors:
  • **Kergueris, Christophe
    38000 Grenoble (FR)**
  • **Gigan, Olivier
    38000 Grenoble (FR)**
  • **Pisella, Christian
    38140 Beaucroissant (FR)**
  • **Yang, Yongjun
    Shijiazhuang 050051 (CN)**
  • **Li, Bo
    Shijiazhuang 050051 (CN)**
  • **Xu, Shujing
    Shijiazhuang 050051 (CN)**

(74) Representative: **Cabinet Laurent & Charras
Le Contemporain
50 Chemin de la Bruyère
69574 Dardilly Cedex (FR)**

(56) References cited:
**US-A1- 2010 186 507     US-A1- 2010 313 657
US-B1- 6 230 563**

## Description

## Technical Field

The invention relates to a micromechanical sensor device for measuring angular z-axis motion comprising:

a) a substrate defining a substrate plane,

b) at least two vibratory structures, each having at least one proof mass,

c) a suspension structure for suspending the two vibratory structures above the substrate for movement in drive-mode direction (x-axis) and in sense-mode direction (y-axis), wherein drive-mode direction and sense-mode direction are parallel to the substrate plane,

d) at least one coupling structure connecting the two vibratory structures,

e) at least one coupling support structure connecting the coupling structure to at least one anchor structure and enabling a rotational swinging movement of the coupling structure, the rotational swinging movement having an axis of rotation that is perpendicular to the substrate plane,

f) wherein each of the vibratory structures comprises at least one shuttle mass coupled to the at least one proof mass by sense-mode springs, which are more flexible in sense-mode direction than in drive-mode direction (x), for activating a vibrational movement of each vibratory structure,

g) at least one drive electrode structure for each shuttle mass for activating drive-mode movements that are parallel to the substrate plane,

h) at least one sensing electrode structure for each proof mass for detecting sense-mode movements that are parallel to the substrate plane.

## Background Art

Micromechanical sensor devices for detecting z-axis rotation are well known in the art and are used in many commercial and military applications such as navigation, vehicle skid control, platform stabilization.

Some basic principles of a vibratory rate gyroscope are described in the chapter background of US 6,230,563 (Integrated Micro Instruments). Based on these principles US 6,230,563 discloses a rotation rate sensor with two proof masses mounted in a suspension system anchored to a substrate. The suspension has two principal modes of compliance, one of which is driven into oscillation. The driven oscillation combined with rotation of the substrate about an axis perpendicular to the substrate results in Coriolis acceleration along the other mode of compliance, the sense-mode. The sense-mode is designed to respond to Coriolis acceleration while suppressing the response to translational acceleration. This is accomplished using one or more rigid levers connecting the two proof masses. The levers allow the proof masses to move in opposite directions in response to Coriolis acceleration. The device proposed in US 6,230,563 includes a means for cancelling errors, termed quadrature error, due to imperfections in implementation of the sensor. Quadrature error cancellation utilizes electrostatic forces to cancel out undesired sense-axis motion in phase with drive-mode position.

US 2010/0139399 (Northrop Grumman LITEF) and US 2010/0116050 (LITEF) disclose a rotation rate sensor that comprises two structures which move relative to the substrate on a design plane (x-y). The two moving structures are coupled by a free floating beam to form a coupled structure such that the coupled structure has a first oscillation mode with anti-phase deflections of the moving structures in a first direction (x) on the design plane (x-y) as excitation mode. The coupled structure has a second oscillation mode as a detection mode which is excited by Coriolis accelerations when the first oscillation mode is excited and on rotation about a sensitive axis (z) of the rotation rate sensor. The structure has a central anchor to which the two mobile structures (two vibrating frames) are connected for rotation about the z-axis. At the periphery, there are additional anchors for stabilizing the vibrating frames.

US 2010/313657 (University of California) discloses a vibratory rate z-axis gyroscope with two or four decoupled vibratory tines. A levered drive-mode mechanism is coupled between the tines to structurally force anti-phase drive-mode motion of the tines at a predetermined drive frequency. The levered drive-mode mechanism is also intended to eliminate spurious frequency modes of the anti-phase drive-mode motion of the tines lower than the predetermined drive frequency and to provide synchronization of drive- and sense-mode motion of the tines. A sense-mode mechanism is coupled between the tines arranged and configured to provide a linearly coupled, dynamically balanced anti-phase sense-mode motion of the tines to minimize substrate energy dissipation and to enhance the sense-mode quality factor and rate sensitivity.

US 6,718,825 B1 (Honeywell), US 6,837,108 (Honeywell), US7,036,373 (Honeywell) disclose a vibratory z-axis gyroscope having two proof masses that are coupled by a transverse beam (or lever) that is suspended by a flexure that allows x-axis translation and z axis rotation. The suspension does, however, not allow y-axis translation of the transverse beam. The input axis is parallel to the substrate plane. In Fig. 1 of US 6,837,108 B1 the z axis, which is the input axis, is indicated to be parallel to the substrate plane, while the y axis is indicated to be normal to the substrate plane (i.e. orthogonal to the plane of the drawing). The masses are responding by an out-of-plane movement (i.e. a movement perpendicular to the substrate plane).

The anti-phase proof mass structures of the prior art are relatively complicated. For instance, the fact that there is a remarkable number of masses and coupling elements between the masses of US 2010/313657, has the effect that the system has many vibrational modes. It is quite difficult to design the whole system in such a way that the cross-coupling of the modes into the output-mode is minimal.

US 2010/0186507 (Günthner) proposes a micromechanical rotation rate sensor with particular suspension springs for the two coupled seismic masses so as to avoid or reduce parasitic modes and interference deflections. The particular spring consists of two parallel bar sections and one connecting section, which connects the parallel bar sections to one another, wherein the bar sections can be displaced relative to one another in their longitudinal direction. The structure for coupling the two seismic masses comprises a coupling bar that is connected to the substrate by torsion springs which only permits torsion about the x axis and is stiff in the z direction.

## Summary of the invention

It is the object of the invention to provide a micromechanical sensor device for measuring angular z-axis motion that has a compact structure and that is easier to control with respect to perturbation or disturbance modes.

The solution of the invention is specified by the features of claim 1. According to the invention the micromechanical sensor device has a substrate (e.g. a chip of a silicon wafer, a chip of a SOI = silicon on insulator) providing the base for the mobile parts. The substrate defines a substrate plane i.e. a geometric plane that is parallel to the surface of the substrate.

There are at least two vibratory structures, each of them having at least one proof mass. Each of the vibratory structures may consist of one single element or of several elements such as masses, beams, frames or even flexures and springs. Further more, there is a suspension structure for suspending the two vibratory structures above the substrate. The geometry of the suspension structure is such that the vibratory structures may move in

drive-mode direction (x-axis) and in sense-mode direction (y-axis), wherein drive-mode direction and sense-mode direction are parallel to the substrate plane. (As a matter of fact, drive-mode direction and sense-mode direction are orthogonal to each other.)

At least one coupling structure of the invention connects the at least two vibratory structures. In the context of the present invention a coupling structure is a micromachined structure that has some mechanical flexibility so that the vibrating movements of the two vibratory structures are elastically coupled. A coupling support structure is connecting the coupling structure to an anchor structure and is enabling a rotational swinging movement of the coupling structure, The axis of rotation is perpendicular to the substrate plane.

Each of the vibratory structures comprises at least one shuttle mass coupled to the at least one proof mass by sense-mode springs, which are more flexible in sense-mode direction (y) than in drive-mode direction (x). Each of the shuttle masses is activated by drive electrodes. The vibration of the shuttle mass activates a vibration movement of the associated vibratory structure.

According to the invention the at least two vibratory structures are intended to vibrate in anti-phase. Therefore, the at least one coupling structure is connecting the two vibratory structures for anti-phase vibration. That is, the coupling structure has a particular mechanical design that is such that anti-phase movements are inherently supported and that in-phase movements of the vibrating structures are shifted to a different frequency. In contrast to the prior art coupling of US 2010/313657 the invention does not use a drive-mode lever and a sense-mode lever. The invention does not require sense-mode shuttle masses and any springs for sense-mode shuttle masses. According to the invention there are also no shuttle masses in the area between the vibratory structures. Nevertheless, it is possible to use sense shuttle masses anchored to the substrate without coupling between the left and right sense shuttles. The primary function of a sense shuttle would be to decouple the proof mass from the sense detection means. The sense shuttle could be implemented in a similar way to the drive shuttle but rotated by 90° with the sense spring of the shuttle connected to the substrate. The purpose of such sense shuttles would be to decouple the sense detection means from the drive motion. It is, however, important to note, that in contrast to the prior art the invention would not use such sense shuttles for coupling of the two vibratory structures.

The device of the invention has at least one drive electrode structure for each shuttle mass for activating drive-mode movements that are parallel to the substrate plane. The drive electrode structure is oriented and designed to activate in-plane x-direction movements. It may comprise an interdigitated finger electrode structure.

The micromechanical device has at least one sensing electrode structure for each proof mass for detecting sense-mode movements that are parallel to the substrate plane. The sensing electrode structure is oriented and designed to detect in-plane y-direction, movements. It may comprise an interdigitated finger electrode structure.

The invention provides a sense-mode coupling via the shuttle masses. The coupling structure may comprise a lever-type element that is connected by drive-mode (x-axis) springs to at least one of the shuttle masses of each vibratory structure. The drive-mode springs are substantially stiff in sense-mode direction (y-axis). The lever-type element may be suspended by an anchor located between the vibratory structures so that the ends of the lever-type element may swing in anti-phase with respect to the anchor location.

According to the invention the coupling support structure is designed to also enable a translational movement of the coupling structure in drive-mode direction (x). Therefore, the coupling structure is attached to the anchor in such a way that it can rotate about an axis that is normal to the substrate plane and that is located typically in the center of the coupling structure. This leads to an anti-phase sense-mode coupling of the two vibratory structures. At the same time the coupling structure can move in drive-mode direction. This leads to an in-phase drive-mode coupling of the two vibratory structures for frequencies below the normal drive mode frequency.

It is a specific aspect of the invention that the coupling support structure has a drive-mode direction flexibility for enabling the translational movement in drive-mode direction.

Each of the sensing electrode structures comprises a first electrode element attached to the substrate and a second electrode element attached to the proof mass the two elements being arranged for generating electrical signals in response to a z-axis rotation (i.e. a rotation about an axis that is orthogonal to the substrate plane).

In the framework of the invention a "structure" is meant to be a machined micromechanical part (i. e. a three-dimensional element) of the device.

Advantages:

The design of the invention is different from the design shown in US 2010/313657 A1 because the invention does not need any sense-mode shuttle masses. Also in contrast to US 2010/313657 A1, the structure of the invention combines a control of the sense-mode frequencies and of the drive-mode frequencies (in-phase and anti-phase each) in the same structural elements. Therefore the invention needs less elements and is more economic with respect to the used substrate area. Since the invention does not need sense-mode shuttle masses, there are less mobile masses in the entire device and, therefore, there are less vibrating modes of the whole system. As a consequence there are less possibilities that the output vibration is disturbed by unwanted or uncontrolled perturbation modes of the system.

In contrast to the coupling structure known from US 2010/0139399 (Northrop Grumman LITEF), the coupling structure of the invention is connected to an anchor and is therefore not as freely movable in sense-mode direction as in drive-mode direction.

It is a specific aspect of the sensor device of the invention that the coupling support structure is designed to separate an in-phase drive-mode frequency from an anti-phase drive-mode frequency as well as an in-phase sense-mode frequency from an anti-phase sense-mode frequency. The separation of the in-phase and anti-phase frequencies makes it possible to selectively activate the anti-phase vibrations for the drive-mode and to selectively detect the anti-phase sense-mode vibrations. Also the energy in the undesired modes is reduced.

It is a further specific aspect of the invention that the coupling support structure of the micromechanical sensor device has a spring constant in sense-mode direction that is substantially higher than its spring constant in drive-mode direction. Therefore, the coupling structure behaves in some way like an anchor upon in-phase sense-mode movements of the vibratory structures. The spring constant in sense-mode direction is preferably at least twice (most preferably at least 10 times) as large as the spring constant in drive-mode direction.

Connection points at a distance:

A specific embodiment of the invention is characterized in that the coupling support structure has at least two connection areas to the coupling structure, wherein the connection areas are separated by a distance from each other and wherein the coupling support structure is designed so that said distance contributes to a frequency difference between the in-phase sense-mode frequency and the anti-phase sense-mode frequency. The connection area is defined at the transition from the coupling structure (e.g. a large beam-like element) to the coupling support structure (e.g. an end of a slim flexure). The connection areas are typically point-like, that is, small compared to the dimension of the whole coupling support structure in drive-mode direction.

The proposed structure has the advantage that an increase (or decrease) of the distance of the connection areas leads to a lower (higher) flexibility of rotation of the coupling structure about an axis orthogonal to the substrate plane. To put it in other words: when the connection areas are close to each other, a rotational vibration of the coupling structure about said orthogonal axis is easier to activate than when the connection areas are further away from each other.

Geometric parameter for frequency separation.

It is a specific aspect of a preferred embodiment of the invention that the coupling support structure is designed to produce a reduced in-phase drive-mode frequency if the drive-mode direction flexibility of coupling support structure is increased (and vice versa). That is, the coupling support structure has the advantage that the difference between the in-phase drive-mode frequency and the anti-phase drive-mode frequency can be easily changed by modifying the geometric dimensions of the structure. The geometric design is therefore made in such a way that it defines said frequency separation.

Amplitude of coupling structure.

According to a specific embodiment of the invention the coupling support structure has a geometric design that allows the translational movement in drive-mode direction to have an amplitude that is at least 10 % of the x-axis translational movement of the proof masses in the undesired in-phase drive vibration mode. The translational movement in drive-mode direction is, therefore, not merely a spurious side effect of the overall movement of the coupling structure. This does not mean, however, that the coupling structure of the invention always performs a large translational amplitude whenever the device is in action. Rather more, the large translational amplitude makes it possible to eliminate disturbing external accelerations on the sensor signals.

Coupling support structure.

According to a preferred embodiment of the invention the coupling support structure consists of at least two flexible elements arranged side by side at a distance from each other. This has the advantage that the rotational flexibility of the coupling structure about an axis orthogonal to the substrate plane can be set and adjusted in the course of engineering the device. It is a feature of a most preferred embodiment to use two flexible elements that are symmetrical to each other, preferably identical. It is, however, also possible to use three or more flexible elements.

According to a specific feature of the invention the at least two elements are straight beams. The beams have a flexibility (i.e. a spring constant) in drive-mode direction that depends on the ratio of their length and their width. (The thickness of the micromechanical elements of the sensor is a dimension that is usually not modified.) Alternatively, the elements may be folded springs that have a high flexibility ("soft") in drive-mode direction and a low flexibility ("stiff") in sense-mode direction.

The straight beams are preferably oriented in sense-mode direction and parallel to each other. It is, however, also possible to arrange the beams in a skew manner (V-shape). The inclination to the sense-mode direction will be symmetrical. The angle of inclination may be e.g. 5° but preferably not more than 15°. As a matter of fact, the translational movement of the coupling structure will not be strictly in drive-mode direction, if the coupling support comprises two inclined (skew) beams.

Distance of elements:

It is a specific feature of an embodiment that two of the at least two elements have a distance d1 from each other that is in the range $0.5 \leq d1/L1 \leq 1.5$ (L1 = length of element). Such a distance will provide sufficient stiffness for the rotational movement of the coupling structure about an axis orthogonal to the substrate plane.

Preferably, the mutual distance of the two elements is approximately the same as the length of the element.

Coupling structure:

A preferred embodiment is characterized in that the coupling structure comprises a beam (or lever) extending in drive-mode direction (x) and at least two drive-mode springs connecting the beam to the shuttle masses. The main feature of a drive-mode spring is that it is more flexible in drive-mode direction than in sense-mode direction. Typically, the spring constant of the drive-mode spring in sense-mode direction is more than twice as large (preferably more than 10 times) as the spring constant of said spring in drive-mode direction. That means, the drive-mode spring is relatively stiff in sense-mode direction.

The beam of the coupling structure may be a simple straight element that has a rectangular shape in the plane parallel to the substrate plane (x-y-plane). The geometric dimension of the beam is such that the beam is relatively stiff in x-y-plane (that is, it cannot be flexed in x- or y-direction).

It is also possible to use a frame-like structure instead of the beam. Alternatively, the beam may have a non-rectangular shape. For instance, the width (i.e. dimension in y-direction) of the beam could be tapered at the beam ends.

Generally speaking, the coupling structure of the invention may comprise two stiff beams extending in drive-mode direction (x-axis), wherein said beams are arranged on opposite ends of the vibratory structure with respect to y-direction.

A special micromechanical sensor device is characterized in that the mechanical coupling structure is connected with each drive mass by two drive-mode springs. The drive-mode springs have a spring constant Fy that is substantially higher than the spring constant Fx. A drive-mode spring may have a folded beam shape and may e. g. consist of two straight flexure elements that extend in sense-mode direction (y-axis) parallel to each other and that are connected at one end with each other in drive-mode direction (x-axis) by a short intermediate element. The mutual distance of the straight flexures may be very small (e.g. in the range of once or twice the width of the flexures) depending on the required amplitude of the spring in drive-mode direction.

The drive-mode spring may have more than two parallel flexure elements that are connected by short intermediate elements to form a meander-like structure. Other designs are also possible. It is not mandatory that the flexures elements are parallel to each other. The drive-mode spring is designed to behave in drive-mode direction like a resilient spring and in sense-mode direction like a stiff element. A drive-mode spring is able to suppress transmission of movements in drive-mode direction (because it is relatively soft in this direction) and to transmit movements in sense-mode direction (because it is relatively stiff in this direction).

The invention is not limited to two drive-mode springs. It is also possible to use a single drive-mode spring or three ore more such springs.

It is a feature of a preferred embodiment that the sense-mode springs and the drive-mode springs are designed to generate a frequency difference between the sense-mode frequency and the drive-mode frequency. The drive mode frequency is defined by the drive-mode spring constant of the drive-mode springs and the sum of the proof mass and the corresponding shuttle masses. On the other hand, the sense mode frequency is defined by the sense-mode spring constant of the sense-mode springs and the proof mass. Generally speaking, the spring constant of the drive mode springs and the spring constant of the sense mode spring are different.

However, it is also possible to nullify the difference between drive mode and sense mode frequencies by using specific electronic means to operate the device in matched mode. The matched mode is preferred for closed-loop operation.

Anchor:

A device of the invention preferably has only two anchors, namely the two anchors to which the suspension support structure is attached. Alternatively, the suspension support may have more than two anchors, e.g. a separate anchor for each of the flexible elements of the suspension support structure. For a better z-axis stability of the mobile structures of the device it may be helpful to provide additional anchors, e.g. anchors to which the vibratory structures are connected via x-y-springs. However, additional anchors may introduce temperature dependent stress into the mobile structure.

The anchor for the suspension structure may be arranged in an area that is between the coupling structures and the shuttle masses with respect to the drive-mode direction (x-axis). Alternatively it may be outside the area that is enclosed by the coupling structure.

Drive system:

The details of the drive system may be as follows: There is a drive electrode structure for each shuttle mass. The drive electrode structure comprises a first electrode attached to the substrate and a second electrode attached to the shuttle mass. The two electrodes are forming electrostatic means for vibrating the shuttle mass in drive-mode direction (x-axis).

The drive electrode structure is preferably arranged in an area between the shuttle mass and the coupling structure in sense-mode direction and between the drive-mode springs connecting the shuttle mass to the coupling structure in drive-mode direction. The drive shuttle has preferably a mass that is as small as possible. For instance, the shuttle mass is at least ten times smaller than the proof mass. The shuttle mass may have a beam-like rectangular shape in x-y-plane. However, it may also have the shape of a frame. Further more, the drive electrode may be arranged laterally (in drive-mode direction) to the shuttle mass or inside the shuttle mass frame.

Another special micromechanical sensor device is characterized in that the shuttle masses are arranged at end sides in sense-mode direction (y-axis) of the proof masses and are coupled to the proof masses in each case by sense-mode springs. A sense-mode spring may have a similar shape and structure as the drive-mode spring the main difference being that the spring structure is oriented in sense-mode instead of drive-mode direction. Since the sense-mode spring and the drive-mode spring may need different dynamic behaviour (e. g. different resonant frequencies) they are, generally speaking, distinct in shape and dimension. Preferably, the sense-mode springs have a folded-beam shape. They may consist of two relatively long straight beam sections and one relatively short beam section that connects the long beam sections to provide a U-shape.

A special micromechanical sensor device is characterized in that the drive-mode spring constant of the drive-mode springs and sense-mode spring constant of the sense-mode springs are different in such a way that the drive signal frequency fd is different from the sensing signal frequency fs. Both of the signal frequencies fd, fs may be in the range of a few kilohertz (e.g. 4 KHz). The difference between the frequencies may be in the range of 1 % to 10 % of the signal frequencies (e.g. fs - fd = 40 - 400 Hz).

A special micromechanical sensor device is characterized by an drive electronic drive circuit connected to the drive electrode structure for generating a drive signal and by an automatic gain control integrated in the drive circuit for controlling anti-phase movement of the drive masses of different vibratory systems.

Sensing electrodes:

According to a specific embodiment of the invention each of the sensing electrode structures comprises a first electrode element attached to the substrate and a second electrode element attached to the proof mass. Said two electrode elements are arranged to generate electrical signals in response to a z-axis rotation of the micromechanical sensor device. (In the framework of the invention the z-axis is orthogonal to the substrate plane.)

The sense electrodes are not symmetric relative to y axis. However, they are symmetrical to the x axis at rest position.

Preferably, there are at least two sensing electrode structures for each proof mass and said two sensing electrode structures are designed to provide signals for differential detection.

The first sensing electrode structure may be designed to generate positive or increasing sensing signals when the proof mass is moving in positive sense-mode direction and negative or decreasing sensing signals when the proof mass is moving in negative sense-mode direction. Accordingly, the second electrode structure is designed to operate in opposite direction, namely to generate negative or decreasing sensing signals when the proof mass is moving in positive sense-mode direction and positive or increasing sensing signals when the proof mass is moving in negative sense-mode direction.

There are other detection schemes that may be used. For instance, additional sense electrodes may be used to counter balance the sense vibration so that a sense closed loop detection scheme is realized. Under certain conditions it is also possible to work without differential detection.

A special micromechanical sensor device is characterized in that at least one of the sensing electrode structures is arranged in an area between the proof masses. The sensing electrode structure may occupy the whole area between the proof masses. If the proof masses have a rectangular shape wherein the longitudinal axis of the rectangle is oriented in sense-mode direction (y-axis), sensing electrodes may take the whole length of the rectangle.

Alternatively the proof mass may have openings or may have a frame-like design and a sensing electrode may be arranged within the opening of the frame of the proof mass.

It is also possible that the sensing electrodes are not directly integrated at the edge of the proof mass but that the electrodes are cooperating with a beam or frame rigidly connected with the proof mass. Such a beam may protrude from the compact proof mass in a desired direction and, therefore, it may be possible to place the sensing electrodes at a distance from the proof mass and at a location on the substrate that is best suited for the electrode structure.

It is preferred to use sensing electrode structures that are arranged on both sides (with respect to drive-mode direction) of the proof mass. In particular, the sensing electrode structure may be symmetrical with respect to the longitudinal axis of the proof mass.

A further special micromechanical sensor device is characterized by a sensing electronic connected to the sensing electrode structure, wherein the sensing electronic comprises a demodulator for eliminating drive-mode signals from the sensing signal. The drive-mode signal may be derived from the input of the automatic gain control circuit. The sensing electronic may be integrated on the same chip as the micromechanical sensor or on a separate one.

According to a specific embodiment of the invention the vibratory structures (namely proof masses and shuttle masses and sense mode springs connecting the shuttle masses to the proof masses) and the suspension structure are symmetrical with respect to x-axis and y-axis. (In the present context, the sense electrodes that are attached to the proof masses are not within the definition of "vibratory system". The sense electrodes are not symmetrical to y-axis.)

Detection method:

The invention also relates to a method for detecting z-axis rotation with a micromechanical sensor device, wherein the method comprises at least the following steps:

a) generating a drive signal and applying said drive signal to at least two shuttle masses, each of the shuttle masses being coupled to one of at least two proof masses, such that the proof masses are vibrating in a drive-mode direction,

b) amplifying and feeding back the drive signal to stimulate anti-phase drive-mode movements of the proof masses,

c) detecting a sense-mode signal generated by at least two sensing electrode structures due to movements of the proof masses in sense-mode direction (wherein the sense-mode direction is different from the drive-mode direction), each of the sensing electrode structures having a first electrode element attached to one the proof masses and a second electrode element attached to a substrate of the micromechanical device,

d) demodulating said sense-mode signal from the drive signal for producing a detection signal corresponding to the z-axis rotation rate.

The method may be carried out by means of any micromechanical device of the invention described above.

Other advantageous embodiments and combinations of features become evident from the detailed description below and the totality of the claims. It is to be mentioned that the different special features may by combined in any desired way.

## Brief description of the drawings

The drawings used to explain the embodiments show:

Fig. 1 a schematic top plan view of a preferred embodiment of the invention for z-axis rotation detection;

Fig. 2 a schematic representation of the basic model of a gyroscope according to the invention;

Fig. 3 a schematic diagram of the electrical control circuit of the device;

Fig. 4          a schematic representation of a preferred coupling support structure in more detail;

Fig. 5a-c       a schematic representation of the movements of the coupling beam in operation;

Fig. 6a-d       different embodiments of the coupling support structure;

Fig. 7a-c       variations of the arrangement of the coupling structure and the coupling support structure;

Fig. 8a, b      a space saving geometric design;

Fig. 9a, b      a preferred embodiment of the drive electronics;

Fig. 10         a geometrical design for sense closed loop operation;

Fig. 11 a, b    an electronic circuit for sense electrostatic means (in closed loop operation);

Fig. 12         an alternative embodiment of the sense electrostatic means for open loop operation;

Fig. 13a, b     electronic circuit for sense electrostatic means (in open loop operation);

Fig. 14         a schematic representation of the signal processing steps.

In the figures, the same components are given the same reference symbols.

**Preferred embodiments**

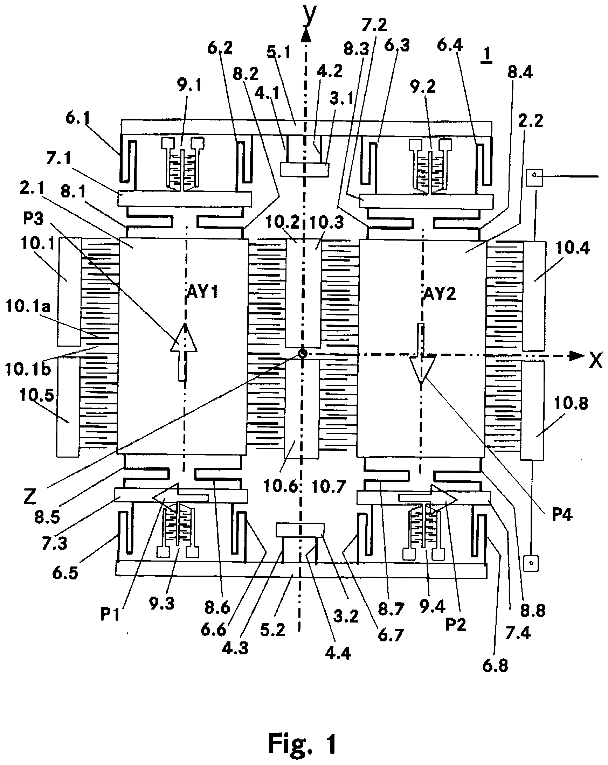

Fig. 1 shows a schematic representation of a preferred embodiment of the invention. The three-dimensional coordinate system is used in the description for clarity purposes. The x-axis corresponds to the drive-mode direction, the y-axis to the sense-mode direction and the z-axis to the rotation detection axis. In the drawings, the z-axis is always normal to the paper plane. Of course, all three axes are orthogonal to each other.

The substrate 1 may be a chip of a silicon wafer as known in the art. The surface of the substrate 1 defines the so called substrate plane, which is parallel to the x-y-plane and which is "below" the structures shown in Fig. 1. The substrate 1 is the base or carrier of the MEMS device (MEMS = Micro electro-mechanical system).

The whole sensor structure that is built onto the substrate 1 is substantially mirror-symmetrical with respect to the y-axis and also with respect to the x-axis. There are two identical proof masses 2.1, 2.2 which have the shape of a rectangular plate. The longitudinal axis AY1, AY2 of the rectangular plate is parallel to the y-axis. The length of the rectangular shape is preferably at least 1.1 times the width of the rectangle (the width being measured in x-direction). Preferably the ratio between the length and the width of the rectangle is not more than 2:1.

The proof masses 2.1, 2.2 are suspended for performing movements parallel to the substrate plane. It is to be noted, that the mobile parts shown in Fig. 1 are designed to only perform movements parallel to the substrate plane. That is, the flexible parts (springs) are relatively stiff in direction of the z-axis. On the longitudinal sides of the proof masses 2.1, 2.2 there are the sense-mode electrodes 10.1, ... 10.8. As shown in Fig. 1, the two stationary sense-mode electrodes 10.2 and 10.3 have a common arm extending in y-direction, wherein the finger electrodes are emanating from both sides of the common arm in +x and -x direction. The same is true for sense-mode electrodes 10.6 and 10.7. In the preferred embodiment of Fig. 1 there are two sensing electrodes 10.1 and 10.5, 10.2 and 10.6, 10.3 and 10.7, 10.4 and 10.8 on each longitudinal side of the proof mass 2.1, 2.2. Each pair of sensing electrodes 10.1/10.5, 10.2/10.6, 10.3/10.7, 10.4, 10.8 substantially the full length of the proof mass 2.1, 2.2. so that the electrical detection signals are as large as possible. Two pairs of the sensing electrodes 10.2/10.6, 10.3/10.7 are arranged in the areay between the proof masses 2.1, 2.2.

The proof masses 2.1, 2.2 have finger electrodes that are provided in an interdigitating relation to the fixed sensing electrodes 10.1, ..., 10.8. Therefore, each fixed sensing electrode 10.1, ..., 10.8 forms an electrostatic means with the interdigitating electrode fingers of the proof masses 2.1, 2.2.

To put it in different words: Each electrostatic sensing means comprises a stationary part (namely a multi-finger electrode part 10.1a) which is fixed to the substrate 1 and a mobile part (namely a multi-finger electrode part 10.1b) which is fixed to the longitudinal side of the proof mass 2.1. The stationary part and the mobile part have a multi-finger structure interleaving with each other. The multi-finger structures of the sensing electrodes 10.1, ..., 10.8 are oriented parallel to the x-axis and are designed to detect movements in y-direction (sense-mode direction). Said multi-finger structures 10.1a, 10.1b are designed not to be sensitive to drive-mode movements of the proof masses 2.1, 2.2.

Each of the proof masses 2.1, 2.2 is suspended above the substrate via four sense-mode springs 8.1, 8.2, 8.5, 8.6 and 8.3, 8.4, 8.7, 8.8 respectively. Each sense-mode spring 8.1, ..., 8.8 has substantially a U-shape, namely two parallel flexures (or beams) oriented in drive-mode direction (x) and connected to each other at one end by a short connection piece. The opposite ends of the flexures, which are the free ends of the U-shape, are attached via short connection pieces in y-direction to the proof mass 2.1 and 2.2, respectively, on one side and to the shuttle mass 7.1, 7.3 and 7.2, 7.4, respectively, on the other side.

There are two shuttle masses 7.1, 7.3 and 7.2, 7.4 for each proof mass 2.1 and 2.2 respectively. The shuttle masses 7.1, ..., 7.4 are all identical and have a rectangular shape. They are much smaller than the proof masses 2.1, 2.2. In the present example they have a length that corresponds to the width of the proof mass 2.1. The width of the shuttle masses 7.1, ..., 7.4 may be e.g. at most one fifth of their length. The shuttle masses 7.1, ..., 7.4 are oriented with their longitudinal axis parallel to the drive-mode direction (x). As shown in Fig. 1 the sense-made springs 8.1, ..., 8.8, which connect the proof mass 2.1, 2.2 to the shuttle masses 7.1, ..., 7.4, are arranged mirror-symmetrical with respect to the longitudinal center axis AY1, AY2 of each of the proof mass 2.1, 2.2. The connection pieces of the drive-mode springs are fixed at the corner (or close to the corner) of the proof mass 2.1, 2.2 and the shuttle masses 7.1, ..., 7.4, respectively.

The shuttle masses 7.1, ..., 7.4 are suspended on their turn via drive-mode springs 6.1, ..., 6.8 above the substrate 1. Said springs are connected with the first of their ends to the longitudinal side of the shuttle mass 7.1, ..., 7.4 which is opposite to the side that is connected to the sense-mode springs 8.1, ..., 8.8. The second ends of the drive-mode springs 6.1, ..., 6.8 are connected to a coupling beam 5.1, 5.2. According to a preferred embodiment of the invention each shuttle mass 7.1, ..., 7.4 is suspended by two drive-mode springs 6.1/6.2, 6.3/6.4, 6.5/6,6, 6,7/6.8 respectively. As shown, the ends of the drive-mode springs are connected at (or close) to a corner of the shuttle mass 7.1, ..., 7.4.

According to the embodiment of Fig. 1 the drive-mode springs 6.1, ..., 6.8 may have an S-shape or Z-shape consisting of three straight flexure sections connected on by short connection pieces to form a meandering structure (folded beam).

The drive-mode springs 6.1, ..., 6.4 connect the shuttle masses 7.1, 7.2 to the coupling beam 5.1. In a similar way, the drive-mode springs 6.5, ..., 6.8 connect the shuttle masses 7.3, 7.4 to the second coupling beam 5.2.

The two drive-mode springs 6.1, 6.2 and the shuttle mass 7.1 and the coupling beam 5.1 define a rectangular area in which the drive electrode 9.1 is located. The drive electrode 9.1 comprises at least two mutually interleaving multi-finger structures and is designed to actuate the shuttle mass 7.1 in x-direction. The other shuttle masses 7.2, 7.3, 7.4 are driven in a similar way by drive electrodes 9.2, 9.3, 9.4.

The coupling beam 5.1 is oriented in drive-mode direction (x) and has a length that extends over both short sides of the proof masses 2.1, 2.2. The coupling beam 5.1 is supported above the substrate 1 via two beams 4.1, 4.2 that are connected to an anchor 3.1. The beams 4.1, 4.2 are parallel to each other and to the sense-mode direction. They have a distance from each other that is several times (e.g. at least ten times) greater than the width of the flexures. In the present embodiment, the anchors 3.1, 3.2 have a rectangular shape and the longitudinal axis of the anchors 3.1, 3.2 are oriented in x-direction. The beams 4.1, 4.2 are connected to the anchor close to the ends of the rectangular shape of the anchor 3.1.

In the present embodiment the anchor 3.1 of the suspension structure is arranged in an area that is provided between the coupling beam 5.1 and the sensing electrode 10.2 in sense-mode direction. At the same time, the anchor 3.1 is between the drive-mode spring 6.2 of the shuttle mass 7.1 of the first proof mass 2.1 and the drive-mode spring 6.3 of the shuttle mass 7.2 of the second proof mass 2.2. Since the two vibratory structures of the invention are substantially mirror symmetrical to each other, the anchor structure is most preferably a single anchor 3.1, 3.2 per coupling beam 5.1, 5.2. So, the present embodiment has just two anchors 3.1, 3.2 and a suspension structure of the proof mass 2.1 that is defined as follows:

- Anchor 3.1 - coupling support beams 4.1, 4.2 - coupling beam 5.1 - drive-mode springs 6.1,6.2 - shuttle mass 7.1 - sense-mode springs 8.1, 8.2;
- Anchor 3.2 - coupling support beams 4.3, 4.4 - coupling beam 5.2 - drive-mode springs 6.5, 6.6 - shuttle mass 7.3 - sense-mode springs 8.5, 8.6.

The second proof mass 2.2 is suspended by similar structural elements in a manner that is symmetric to the suspension of proof mass 2.1. The anchor 3.1 of the suspension structure is arranged in an area between the shuttle masses with respect to the drive-mode direction (x-axis). In other words: The anchors 3.1, 3.2 are in line (in y-direction) with the sensing electrodes 10.2/10.6 and 10.3/10.7, which are placed in the area between the proof masses 2.1, 2.2.

The flexibility of the drive mode springs 6.1 and 6.2, the length of the coupling beam 5.1 and the flexibility as well as the mutual distance of the coupling support beams 4.1 and 4.2 have to be designed as a system to ensure the effect of the in-phase mode shift with respect to the anti-phase mode.

To sum up the embodiment of Fig. 1, the special embodiment is characterized in that the mechanical coupling structure comprises two beams extending in drive-mode direction (x-axis) and arranged on opposite ends of the vibratory structures with respect to sense-mode direction (y-axis). The two beams are independent from each other because they are not directly connected with each other. The length of the beams may correspond to the sum of the lateral distance of the proof masses plus twice the width of one of the proof mass in drive-mode direction (x-axis). The beams may also be shorter (e. g. sum of the lateral distance of the proof masses plus once the width of one of the proof mass in drive-mode direction).

The beams may be straight elements having a constant width and cross-section along their length. They may also have tapered ends. Instead of using beams the mechanical coupling structure may use a frame-structure that surrounds the vibratory systems. It is also possible to use double beam structures or more complex designs.

Operation:

The drive electrodes 9.1, ..., 9.4 activate the shuttle masses 7.1, ..., 7.4 at a drive-mode frequency f_drive ($\sim\omega_d$) to perform a vibratory movement in x-direction. Due to the fact that the sense-mode springs 8.1, ..., 8.8 are relatively stiff in drive-mode direction (at drive-mode frequency f_drive) the vibratory movement of the shuttle masses 7.1, ..., 7.4 are transmitted to the proof masses 2.1, 2.2. It is to be noted, that in the drive-mode the vibratory mass of the left hand system in Fig. 1 consists substantially of the proof mass 2.1 plus the two shuttle masses 7.1, and 7.3. (The mass of the sense-mode springs 8.1, 8.2, 8.5, 8.6, which are also part of the vibratory system, is relatively small and may be neglected at this juncture.)

In addition, the driving signals of electrodes 9.1, 9.3 (for proof mass 2.1) are applied in anti-phase to the driving signals of electrodes 9.2, 9.4 (for the opposite proof mass 2.2). Therefore, the proof masses 2.1, 2.2 vibrate in the drive-mode in anti-phase, as shown by arrows P1 and P2.

When a rotation of the device about the z-axis (normal to the substrate plane) takes place, the Coriolis effect generates a vibration of the proof masses 2.1, 2.2 in y-direction at a sense-mode frequency f_sense The two masses move in anti-phase as indicated by arrows P3, P4. Because the sense-mode springs 8.1, ..., 8.8 are relatively soft in sense-mode direction, the kinetic energy in y-direction that is induced by the Coriolis effect is concentrated in the proof masses 2.1, 2.2 and is in general not transmitted (in any substantial amount) to the shuttle masses 7.1, ..., 7.4. Due to the fact that, on one hand, the suspension of the shuttle masses 7.1, ..., 7.4 by drive-mode springs 6.1, ..., 6.8 is relatively stiff in y-direction and that, on the other hand, the coupling beam has some flexibility to rotate about its center point, there is an anti-phase coupling of the two vibratory structures at sense-mode frequency f_sense, namely of "proof mass 2.1 + shuttle masses 7.1, 7.3" on one hand and "proof mass 2.2 + shuttle masses 7.2, 7.4" on the other hand.

The sense electrodes 10.1,..., 10.8 are used to detect the anti-phase vibration of the proof masses 2.1, 2.2 in y-direction generated by the Coriolis effect. The sense electrodes may only be used for detection (performing a differential or a single-ended measurement). Alternatively, the sense electrodes may be used to detect and to counter balance the vibration (closed sense loop operation).

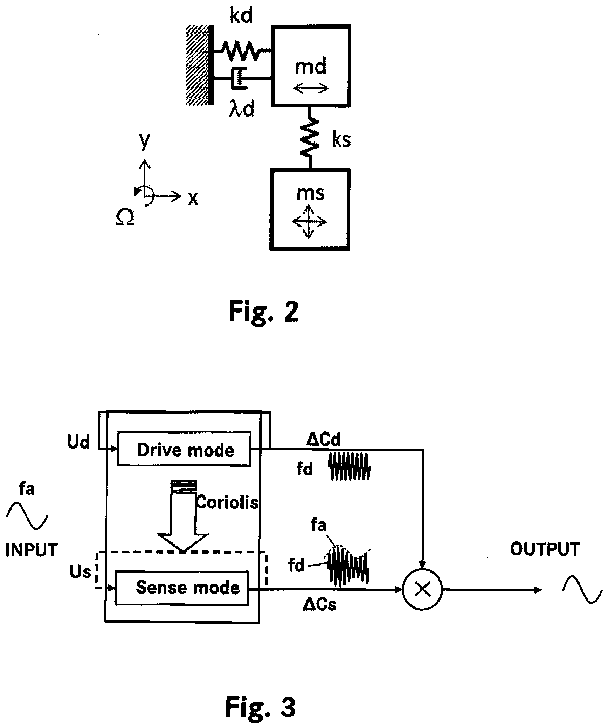

Fig. 2 shows the principle on which the device of the invention is based. The vibratory mass M

$$M = md + ms$$

is the sum of the proof mass ms (2.1) and of the drive shuttle mass md (7.1) and is suspended by springs that have a spring constant Kd in x-direction and a damping factor $\lambda$d. The shuttle mass and the proof mass are coupled by a spring having a spring constant ks. The x-axis and the y-axis are in the plane of the drawing and the rotation rate $\Omega$, which is to be detected, is perpendicular to the x-y-plane. The proof mass is mobile in x and y direction while the drive shuttle mass is primarily mobile in x-direction (drive mode direction).

The micromechanical sensor device consists of two oscillators as depicted in Fig. 2 working in orthogonal directions. The drive system oscillates in x direction, the sense system in y direction. Drive and sense systems consist of two vibratory masses oscillating in anti phase and described by their spring and damping constants.

An electronic device (preferably an integrated circuit) is used to sustain stable anti-phase vibrations in x-direction at the drive frequency of the drive system. For this purpose, two electronic loops are required, one dedicated to the vibration phase, the other to the vibration amplitude.

Fig. 3 illustrates the detection principle. Ud is the voltage used to actuate the drive oscillation of the drive part. Subject to an input angular rate $\Omega$ (frequency fa) on z-direction, the energy of the drive mode is transferred to the sense mode due to the Coriolis effect. The resulting vibration of the sense system corresponds to a vibration at drive frequency fd (carrier frequency) with an amplitude modulated dependent on the input angular rate $\Omega$ (frequency fa). (In the optional sense closed-loop operation, a signal with voltage Us is nullifying the sense mode amplitude of the proof mass.) In other words: The sense mode oscillation carrier has a frequency fd and an amplitude modulation frequency fa.

The electronic device is used to extract the amplitude of the resulting sense vibrations from the sense signal using the drive signal (wherein the drive signal has the frequency fd and the amplitude voltage Ud) which is representative of the sustained vibrations of the drive system.

In sense open loop operation, the sense signal corresponds to the measured capacitance variation which is representative of the resulting vibrations of the sense system. In Fig. 3 the capacitance variation of the drive electrodes is $\Delta$Cd and the capacitance variation of the sense electrodes is $\Delta$Cs.

In sense closed loop operation, the sense signal corresponds to the signal used to counter balance the resulting vibrations of the sense system.

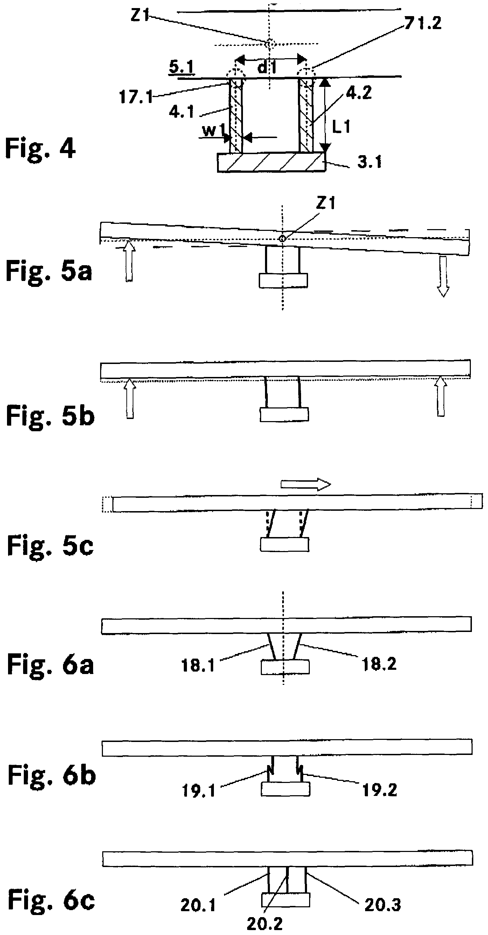

Fig. 4 shows the coupling support structure of the embodiment of Fig. 1. The beams 4.1, 4.2 have a width w1, a length L1 and a mutual distance d1. They define two parallel flexible elements that are elastic in x-direction. For a predefined thickness of the MEMS layer (i.e. of the layer from which all suspended elements are machined) the ratio of length L1 to width w1 defines the flexibility of the beams 4.1, 4.2 in x-direction. The width w1 also defines the elasticity of the beams in y-direction. And the distance d1 between the two beams 4.1, 4.2 (more specifically: the distance between the longitudinal middle axes-dotted lines - of the beams 4.1, 4.2) defines the rotational flexibility about the center axis c of the coupling beam 5.1. (Center axis c is orthogonal to the substrate plane.)

The width w1 is small compared to the distance d 1. For example, the ratio d1/w1 may be 10 or more. The distance d1 is preferably similar to the length L1: $d1/L1 \approx 1$. However, the ratio may also be in the range $0.5 \leq d1/L1 \leq 1.5$. Because the width w 1 is small compared to the distance d 1, the contact areas 17.1, 17.2, which are formed at the transition of the beams 4.1/4.2 to the coupling beam 5.1, are like small points or spots on the coupling beam.

Fig. 5a-c show the movements of the coupling beam 5.1 that are facilitated by the coupling support structure (beams 4.1, 4.2). Fig. 5a shows the anti-phase sense-mode movement. The coupling beam 5.1 is rotating (swinging) about its center axis z1 (see Fig 4). The rotational flexibility is primarily controlled by the distance d1 of the two elastic elements (beams 4.1, 4.2). To some extent, said rotational flexibility is also influenced by the width w1 of the beams 4.1, 4.2.

Fig. 5b shows the theoretically possible in-phase sense-mode movement. The coupling beam 5.1, moves parallel to the y-axis. This movement is located to a higher frequency (compared to the frequency of the anti-phase movement of Fig. 5a) because the flexibility of the beams 4.1, 4.2 in y-direction is low compared to the rotation flexibility shown in Fig 5a. So the anti-phase sense vibration frequency is reduced compared to the in-phase sense vibration frequency

Fig. 5c illustrates the translational movement in x-direction. The straight beams 4.1, 4.2, which are attached orthogonally to the anchor 3.1 with their first ends and to the coupling beam 5.1 with their second end, support a parallel orientation of the coupling beam 5.1 during the translational movement.

Fig. 6a-d show different embodiments of the coupling support structure. According to Fig. 6a, the elastic elements 18.1, 18.2 may be arranged at an angle of e.g. 5° - 15° with respect to the axis of symmetry (dotted line).

Fig. 6b shows a flexure that has a folded-beam structure 19.1, 19.1. A further example for a folded-beam structure is the drive-mode spring 6.1 shown in Fig. 1. That spring has three parallel sections that are interconnected by short bridging sections oriented orthogonal to the three sections. Such a spring design might provide more freedom in controlling the spring constant in sense-mode direction (y).

Fig. 6c shows a coupling support structure with three flexible elements, in particular with three beams 20.1, 20.2, 20.3. The tuning of the frequencies may primarily take place by designing the outer beams 20.1, 20.3.

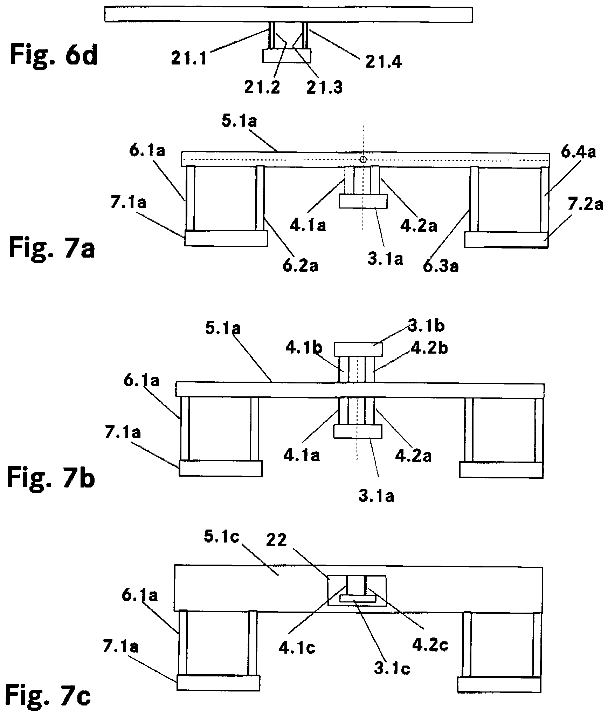

Fig. 6d shows a coupling support structure with four flexible elements 21.1, ..., 21.4. The elements may be arranged in pairs 21.1/21.2 and 21.3/21.4. The flexible elements of one pair may have a distance from each other that is much smaller than the distance of the pairs 21.1/21.2 and 21.3/21.4 inner elements 21.2, 21.3 to each other.

Fig. 7a-c show variations of the coupling structure and the coupling support structure of Fig. 1. The reference numerals used in Fig. 1 are modified by "a", "b" and "c" in order to show that the general function of the elements with the same numbers is the same but that the detailed geometric design might be different. Fig. 7a depicts the general structure of Fig. 1. The shuttle masses 7.1a, 7.2a are each connected via two drive-mode springs 6.1a, 6.2a and 6.3a, 6.4 a to a transverse coupling beam 5.1a. The coupling beam 5.1a is connected via two drive-mode springs 4.1a, 4.2a to the anchor 3.1a. It is to be noted that the elements 3.1 a to 7.1a may have a design that is different from the concrete geometric shape shown in Fig. 1. In the present context, only the function of the elements and their geometric arrangement relative to each other is relevant.

In Fig. 7a the elements 3.1 a, 4.1a, 4.2a are on the same side of the coupling beam 5.1a as the elements 6.1a, ..., 6.4a, 7.1a, 7.2a.

The embodiment of Fig. 7b differs from that one of Fig. 7a in that the coupling beam 5.1a is supported by a second coupling support structure, namely by two drive-mode springs 4.1 b, 4.2b, which are connected to a second anchor 3.1 b. The second coupling support structure is arranged mirror-symmetrically with respect to the longitudinal axis of the coupling beam 5.1a. For this embodiment it may be advantageous to use folded-beam springs for the drive-mode springs 4.1a/4.1b, 4.2a/4.2b.

An alternative to embodiment of Fig. 7b may be to only use the anchor 3.1b and the drive-mode springs 4.1 b, 4.2b and leave out the elements 3.1 a, 4.1 a, 4.2a. That is, the coupling support structure is on the opposite side of the coupling beam 5.1a than the shuttle masses 7.1 a, 7.2a and their drive-mode springs 6.1 a, ..., 6.4a.

Fig. 7c shows an embodiment where the coupling support structure is arranged within the coupling beam 5.1c. The beam 5.1c has an opening 22 in the center that is sufficiently large to accommodate the drive-mode springs 4.1c, 4.2c and the anchor 3.1c.

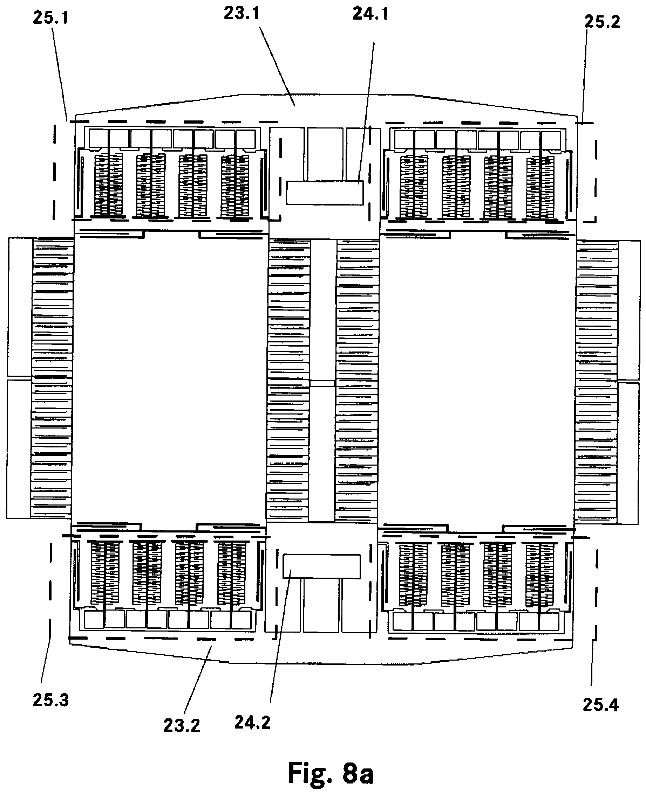

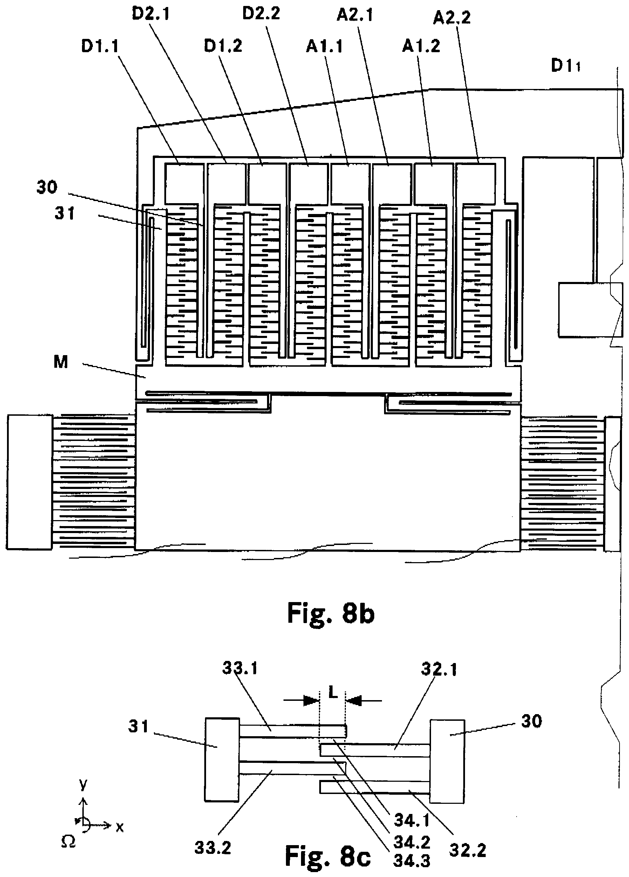

Fig. 8a, b show a space saving design based on the design of Fig. 1. The two transverse coupling beams 23.1, 23.2 are tapering towards their ends. The two anchors 24.1, 24.2 of the suspended structure is arranged in a square free area delineated by the coupling beam the inner drive-mode springs and the central sensing electrodes. There are four drive electrode systems 25.1, ..., 25.4 in each corner of the whole structure, namely one drive electrode system 25.1, ...., 25.4 for each shuttle mass. These electrode structures are placed in a rectangular area delineated by the coupling beam the shuttle mass and the outer and the inner drive-mode springs. The four drive electrode systems 25.1, ...., 25.4 are arranged and designed mirror symmetrically with respect to the x- and y-axis.

Fig. 8b shows the drive electrode system 25.1 in more detail. The system comprises 8 fixed electrodes D1.1, D2.1, D1.2, D2.2, A1.1, A2.1, A1.2, A2.2. Each of the fixed electrodes cooperates with a mobile electrode M. The mobile electrode is implemented on the shuttle mass. A pair consisting of a fixed electrode (e.g. D1.1) and a cooperating mobile electrode (e.g. M) defines an electrostatic means having the function of a variable capacitor. This means, that in the preferred embodiment of Fig. 8b the electrode system 25.1 has 8 electrostatic means.

Fig. 8c shows a small extract of the electrostatic means and it illustrates how the fixed electrode D1.1 and the mobile electrode M cooperate according to a preferred embodiment. The fixed electrode D1.1 has an electrode arm 30 extending in y-direction and a large number of electrode fingers 32.1, 32.2, etc. The mobile electrode M has an electrode arm for each of the fixed electrodes D1.1, ... A2.2. The electrode arm 31 has a similar number of electrode fingers 33.1, 33.2 like the fixed electrode arm 30. The electrode fingers 32.1, 32.2, 33.1, 33.2 of the electrodes are extending in x-direction and are interleaving with each other by a length L. The gaps 34.1, 34.2, 34.3, that exist in y-direction in the interleaving area between the electrode fingers 32.1, 32.2, 33.1, 33.2, all have the same width in y-direction in the basic position of the mobile structure. The length of the gaps 34.1, ..., 34.3 corresponds to the overlap L of the electrode fingers 32.1, 32.2, 33.1, 33.2 in the still position of the device. In operation, the overlap length L of the fingers varies depending on the movement of the vibratory structure.

In the present embodiment the fixed electrodes D (D1.1, D2.1, D1.2, D2.2) are used to control the shuttle mass position by differential detection: D1 - D2. On the one hand, the fixed electrodes D1 (namely D1.1, D1.2) form with the facing mobile electrode (M) a capacitor that is increasing when the left vibratory structure (2.1, 7.1) is moving to the right and the right vibratory structure (2.2, 7.2) to the left. On the other hand the fixed electrodes D2 (namely D2.1, D2.2) form with the facing mobile electrode (M) a capacitor that is decreasing when the left vibratory structure (2.1, 7.1) is moving to the right and the right vibratory structure (2.2, 7.2) to the left.

The fixed electrodes A (A1.1, A2.1, A2.1, A2.2) are used to drive the shuttle mass and consequently the proof mass due to the stiffness of the sense spring in the drive direction (differential actuation). A voltage applied to the fixed electrodes A1 (namely A1.1, A1.2) generates an electrostatic force that is moving the left vibratory structure (2.1, 7.1) to the right (+x direction) and the right vibratory structure (2.2, 7.2) to the left (-x direction). A voltage applied to the fixed electrodes A2 (namely A2.1, A2.2) generates an electrostatic force that is moving the left vibratory structure to the left and the right vibratory structure to the right.

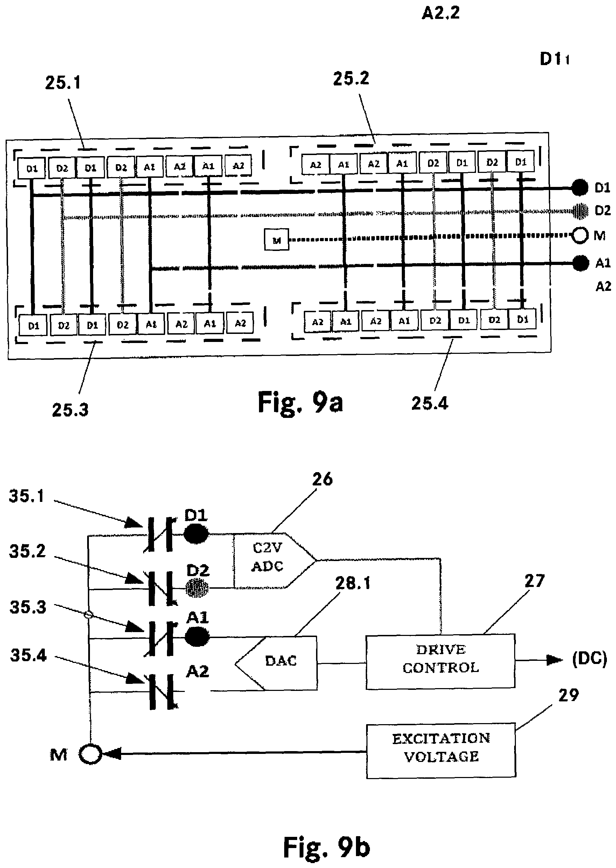

Fig. 9a, b show a preferred embodiment of the drive electronics. The four drive electrode systems 25.1, ..., 25.4 (which may have the geometric design shown in Fig. 8a-c) are electrically contacted as indicated in Fig. 9a and are connected to the electronics as follows:

The capacitance of electrodes D1 and D2 are converted by a capacitance-to-voltage converter C2V into analogue voltage then into a digital value by the ADC-converter 26. The output of the ADC-converter 26 is input to the drive control 27. The output of the drive control 27 is directed to the DAC converter 28.1, which generates two anti-phase drive signals for the fixed electrodes A1, A2. The mobile electrode M is fed with an analogue excitation voltage signal that is generated by the signal generator 29. The excitation voltage has a frequency that is suitable for measuring the capacitance of the electrostatic means. Each of the variable capacitance 35.1, ..., 35.4 of Fig. 9b symbolises one or several functionally parallel electrostatic means that are provided in the four drive electrode systems 25.1, ..., 25.4 and that are electrically parallel with each other as shown in Fig. 9a.

The electronic circuit shown in Fig. 9a, b illustrates a way of designing the drive loops for sustaining the drive oscillation with amplitude and phase control.

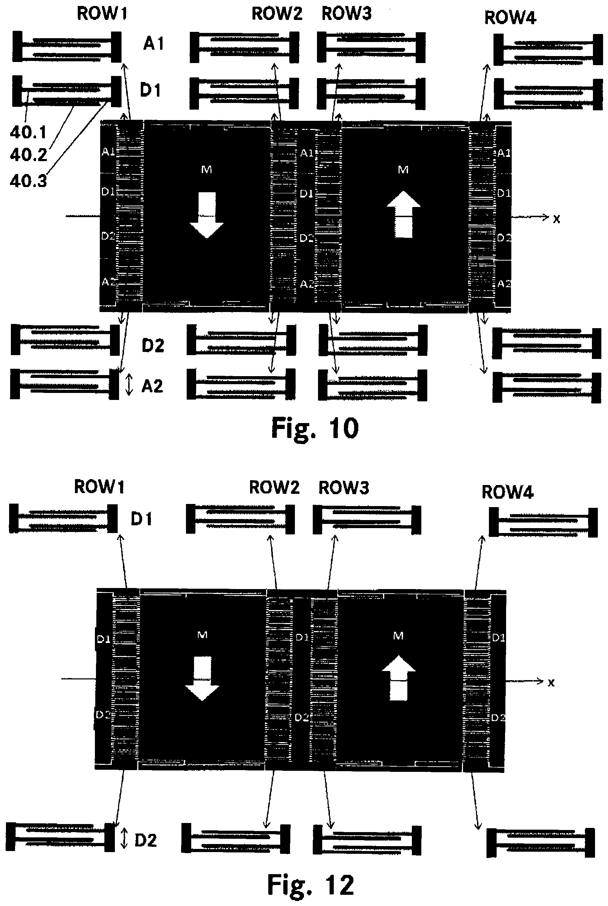

Fig. 10 shows an embodiment with a geometrical design for closed loop operation of the sense electrode system. The electrostatic means all have a plurality of interleaving electrode fingers (interdigitated electrodes). The overlapping length of the interleaving electrode fingers is the same for all fingers and it may be larger than 50% of the length of the electrode fingers (in the still position of the mobile mass). The gaps between the electrode fingers are not the same for all fingers. In an alternating way there are large and small gaps. This is illustrated by electrode fingers 40.1, ..., 40.3: The gap between the electrode fingers 40.2 and 40.1 is substantially larger than the gap between the electrode fingers 40.2 and 40.3.

The mobile electrode M is defined by the proof mass. There are four different functions A1, D1, D2, A2 for the fixed sensing electrodes.

The fixed sensing electrodes D (namely D1 and D2 in ROW1, ..., ROW4) are used to detect the proof masses position by differential detection: D1- D2.

The geometric design (namely the position of the small and the large gaps i.e. the relative position of the interdigitated electrodes to each other) of the sensing electrode system is such that the fixed electrodes D1 form a capacitor with the facing mobile electrode M, wherein the capacitance is increasing when the left proof mass is moving down (-y direction) and the right proof mass is moving up (+y direction).

At the same time the geometric design is such that the fixed electrodes D2 form a capacitor with the facing mobile electrode M that is decreasing when the left proof mass is moving in -y direction and the right proof mass is moving in +y direction.

The fixed electrodes A are used to counter balance the anti-phase proof masses motion (differential actuation). A voltage applied to the fixed electrodes A1 generates an electrostatic force that is moving the left proof mass in -y direction and the right proof mass in +y direction. A voltage applied to the fixed electrodes A2 generates an electrostatic force that is moving the left proof mass in +y direction and the right proof mass in -y direction.

The upper (+x axis) and lower (-x axis) parts of both proof masses are symmetric relative to the x-axis. This is evident from Fig. 10, where the geometric design of the fingers (and the gaps) of the electrodes A1 and A2 are symmetrical with respect to the x-axis. A similar mirror symmetry is valid for the electrodes D1 and D2.

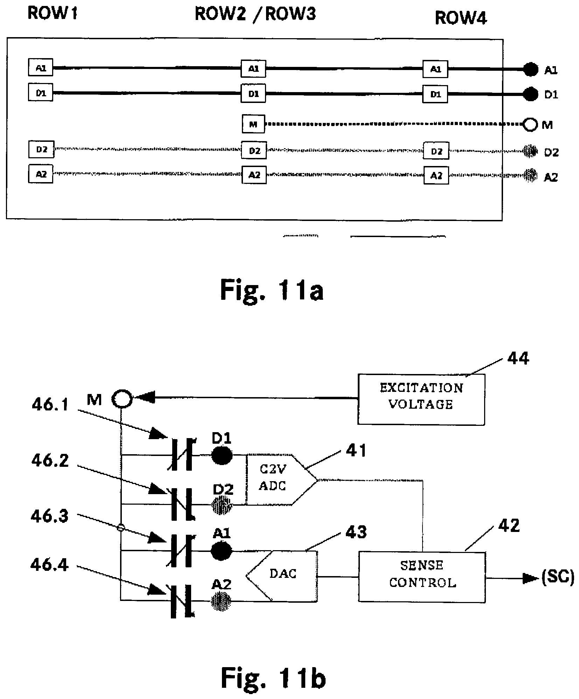

Fig. 11a, b show the electronic circuit for sense electrostatic means (in closed loop operation) and with a sense loop for forced feedback to null the proof mass motion.

The four sense electrode systems ROW1, ..., ROW4 (which may have the geometric design shown in Fig. 10) and the mobile electrode M are electrically contacted as indicated in Fig. 11a, b and are connected to the electronics as follows:

The capacitance of electrodes D1 and D2 are converted by a capacitance-to-voltage converter C2V into analogue voltage then into a digital value by the ADC-converter 41. The output of the ADC-converter 41 is input to the sense control 42. The output of the drive control 42 is directed to the DAC converter 43, which generates two compensation signals for the fixed electrodes A1, A2. The mobile electrode M is fed with an analogue excitation voltage signal that is generated by the signal generator 44. The excitation voltage has a frequency that is suitable for measuring the capacitance of the electrostatic means. Each of the variable capacitance 46.1, .., 46.4 of Fig. 11b symbolises one or several functionally parallel electrostatic means that are provided in the sense electrode system and that are electrically parallel with each other as shown in Fig. 11a.

The electronic circuit shown in Fig. 11a, b illustrates a way of designing the sense loops for compensating the sense mode oscillations which are induced by the Coriolis force. Therefore, the proof mass has only a minimum amplitude in y-direction, because the amplitude that would occur when there was no compensation is practically nullified by the controlled electrostatic compensation force.

Fig. 12 shows an alternative embodiment of the sense electrostatic means for open loop operation. In contrast to the embodiment of Fig. 11a, b the open loop system does have a substantial amplitude of the proof mass in sense mode direction.

The mobile electrode M is defined by the proof mass. There are two different functions D1, D2 for the fixed sensing electrodes. The design of the electrodes is, therefore, simpler but still similar to that of the closed loop sensing system of Fig. 10. That is, the gaps between the interdigitated electrode fingers are not all the same but are alternatively large and small (as shown in Fig. 10 "D1 - ROW1").

The geometric design (namely the position of the small and the large gaps i.e. the relative position of the interdigitated electrodes to each other) of the sensing electrode system is such that the fixed electrodes D1 form a capacitor with the facing mobile electrode M, wherein the capacitance is increasing when the left-hand proof mass (-x axis) is moving down (-y direction) and the right-hand proof mass (+x axis) is moving up (+y direction).

At the same time the geometric design is such that the fixed electrodes D2 form a capacitor with the facing mobile electrode M that is decreasing when the left-hand proof mass is moving in -y direction and the right-hand proof mass is moving in +y direction. The electrostatic means are symmetrical with respect to the x-axis.

The fixed electrodes D are used to detect the proof masses position by differential detection: D1-D2.

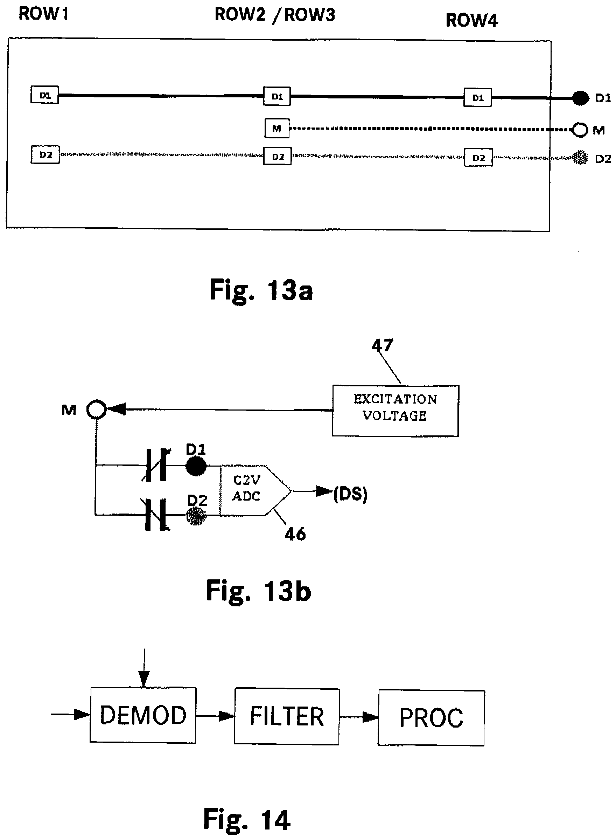

Fig. 13a, b show the electronic circuit for sense electrostatic means (in open loop operation) and with a detection scheme to detect the position of the proof mass.

The four sense electrode systems ROW1, ..., ROW4 (which may have the geometric design shown in Fig. 12) and the mobile electrode M are electrically contacted as indicated in Fig. 13a, b and are connected to the electronics as follows:

The capacitance of electrodes D1 and D2 are converted by a capacitance-to-voltage converter C2V into analogue voltage then into a digital value by the ADC-converter 46. The differential detection signal DS is input to the processing circuit (shown in Fig. 14). The mobile electrode M is fed with an excitation voltage signal that is generated by the signal generator 47 and that has the frequency that is suitable for detecting the capacitance of the electrostatic means. Each of the variable capacitance 49.1, 49.2 of Fig. 13b symbolises one or several functionally parallel electrostatic means that are provided in the sense electrode system and that are electrically parallel with each other as shown in Fig. 13a (and Fig. 12).

Fig. 14 shows a schematic representation of the signal processing steps. When using a closed loop sense system (as explained in Fig. 11a, b) the sense control signal output SC (Fig. 11b) of the sense control circuit 42 and the drive control signal DC (Fig. 9b) of the drive control 27 are fed into the demodulator DEMOD. The output signal of the DEMOD is a signal that is proportional to the rotation rate $\Omega$ that is to be detected. The signal of the DEMOD is fed to a filter and then to a signal processor PROC. The output of the signal processor may be used as an input signal for any desired digital system control (e.g. in an automobile).

As sense open loop system (as shown in Fig. 13) may use the output signal (DS) of the ADC converter 46 and the drive control signal DC (Fig. 9b) for the demodulator DEMOD of Fig. 14.

In summary, it is to be noted that the invention proposes a compact design for a micromechanical gyroscope for z-axis rotation rate detection. It is relatively easy to adjust the frequency split between the anti-phase drive-mode and the anti-phase sense-mode.

## Claims

1. A micromechanical sensor device for measuring a z-axis angular rate comprising:

   a) a substrate (1) defining a substrate plane and a z-axis perpendicular to the substrate plane,
   b) at least two vibratory structures (2.1, 2.2, 7.1, .... 7.4) each having at least one proof mass (2.1, 2.2),
   c) a suspension structure (3.1, 3.2, 4.1, ..., 4.4, 5.1, 5.2, 6.1, ..., 6.8) for suspending the two vibratory structures (2.1, 2.2, 7.1, ..., 7.4) above the substrate (1) for movement in drive-mode direction (x-axis) and in sense-mode direction (y-axis), wherein drive-mode direction and sense-mode direction are parallel to the substrate plane,
   d) at least one coupling structure (5.1, 5.2, 6.1, ... 6.8) connecting the two vibratory structures (2.1, 2.2, 7.1, ..., 7.4),
   e) at least one coupling support structure (4.1, ..., 4.4) connecting the coupling structure (5.1, 5.2, 6.1, ... 6.8) to at least one anchor structure (3.1, 3.2) and enabling a rotational swinging movement of the coupling structure (5.1, 5.2), the rotational swinging movement having an axis of rotation (z1) that is perpendicular to the substrate plane,
   f) wherein each of the vibratory structures (2.1, 2.2, 7.1, .... 7.4) comprises at least one shuttle mass (7.1,..., 7.4) coupled to the at least one proof mass (2,1, 2.2) by sense-mode springs (8.1, ..., 8.8), which are more flexible in sense-mode direction than in drive-mode direction (x), for activating a vibration movement of each vibratory structure (2.1, 2.2, 7.1,..., 7.4),
   g) at least one drive electrode structure (9.1, ..., 9.4) for each shuttle mass (2.1, 2.2) for activating drive-mode movements that are parallel to the substrate plane,
   h) at least one sensing electrode structure (10.1, 10.2) for each proof mass (2.1, 2.2) for detecting sense-mode movements that are parallel to the substrate plane,

   **characterized in that**

   i) the coupling support structure (4.1, ..., 4.4) is designed to also enable a translational movement of the coupling structure (5.1, 5.2, 6.1, ... 6.8) in drive-mode direction (x).

2. A micromechanical sensor device according to claim 1, **characterized in that** the coupling support structure (4.1, 4.2) is designed to separate an in-phase drive-mode frequency from an anti-phase drive-mode frequency as well as an in-phase sense-mode frequency from an anti-phase sense-mode frequency.

3. A micromechanical sensor device according to claim 1, **characterized in that** the coupling support structure (4.1, 4.2) has a spring constant in sense-mode direction that is substantially higher than its spring constant in drive-mode direction.

4. A micromechanical sensor device according to any of claims 1 to 3, **characterized in that** the coupling support structure (4.1, 4.2) has at least two connection areas (17.1, 17.2) to the coupling structure (5.1), wherein the connection areas (17.1, 17.2) are separated by a distance (d 1) from each other and wherein the coupling support structure (4.1, 4.2) is designed so that said distance contributes to a frequency difference between the in-phase sense-mode frequency and the anti-phase sense-mode frequency.

5. A micromechanical sensor device according to any of claims 1 to 4, **characterized in that** the coupling support structure (4.1, 4.2) has drive-mode direction flexibility for enabling the translational movement in drive-mode direction and that the coupling support structure (4.1, 4.2) is designed to produce a reduced in-phase drive-mode frequency if the drive-mode direction flexibility of coupling support structure (4.1, 4.2) is increased.

6. A micromechanical sensor device according to any of claims 1 to 5, **characterized in that** the coupling support structure (4.1, 4.2) consists of at least two flexible elements arranged side by side at a distance from each other.

7. A micromechanical sensor device according to claim 6, **characterized in that** the at least two flexible elements are straight beams.

8. A micromechanical sensor device according to any of claims 6 to 7, **characterized in that** two of the at least two elements have a distance d1 from each other that is in the range $0.5 \leq d1/L1 \leq 1.5$, wherein L1-length of element.

9. A micromechanical sensor device according to any of claims 1 to 8, **characterized in that** the coupling structure (5.1, 6.1, .... 6.4) comprises a beam extending in drive-mode direction (x) and at least two drive-mode springs (6.1, ..., 6.4) connecting the beam to the shuttle masses (7.1, 7.2), the drive-mode springs (6.1, ..., 6.4) being more flexible in drive-mode direction than in sense-mode direction.

10. A micromechanical sensor device according claim 9, **characterized in that** sense-mode springs (8.1, ..., 8.4) and the drive-mode springs (6.1, ..., 6.4) are designed to generate a frequency difference between the sense-mode frequency and the drive-mode frequency.

11. A micromechanical sensor device according to any of claims 1 to 10, **characterized in that** the suspension structure (3.1, 4.1, 4.2, 5.1, 6.1, ..., 6.4) has no other anchors than the anchors to which the coupling structure (5.1, 5.2, 6.1, ..., 6.4) is connected by coupling support structure (4.1,4.2).

12. A micromechanical sensor device according to any of claims 1 to 11, **characterized in that** there is a drive electrode structure (9.1, 9.2) for each shuttle mass (7.1, 7.2) wherein the drive electrode structure (9.1, 9.2) comprises a first electrode attached to the substrate and a second electrode attached to the shuttle mass (7.1, 7.2) the two electrodes forming electrostatic means for vibrating the drive-mode mass in drive-mode direction (x-axis),

13. A micromechanical sensor device according to any of claims 1 to 12, **characterized in that** the drive electrode structure (9.1, 9,2) is arranged in an area between the shuttle mass (7.1, 7.2) and the coupling structure (5.1, 5.2, 6.1, ... 6.4) in sense-mode direction and between the drive-mode springs (6.1, ..., 6.4) connecting the shuttle mass (7.1, 7.2) to the coupling structure (5.1, 5.2, 6.1, ... 6.4) in drive-mode direction.

14. A micromechanical sensor device according any of claims 1 to 13, **characterized in that** each of the sensing electrode structures comprises a first electrode element attached to the substrate and a second electrode element attached to the proof mass (2.1, 2.2) the two electrode elements being arranged for generating electrical signals in response to a z-axis rotation of the micromechanical sensor device.

15. A micromechanical sensor device according to any of claims 1 to 14, **characterized in that** at least one of the sensing electrode structures (10.2, 10.5) is arranged between the proof masses (2.1, 2.2),

16. A micromechanical sensor device according to claim 15, **characterized in that** the anchor (3.1) of the suspension structure is arranged in an area between the shuttle masses with respect to the drive-mode direction (x-axis).

17. A micromechanical sensor device according to any of claims 1 to 16, **characterized in that** the vibratory structures (2.1, 2.2, 7.1, ..., 7.4) and the suspension structure (3.1, 3.2, 4.1, ..., 4.4, 5.1, 5.2, 6.1, ..., 6.8) are symmetrical with respect to x-axis and y-axis.

18. Method for detecting a z-axis rotation with a micromechanical sensor device as claimed in claim 1 comprising the steps of:

   a) generating a drive signal and applying said drive signal to at least two shuttle masses, each of the shuttle masses being coupled to one of at least two proof masses, such that the proof masses (2.1, 2.2) are vibrating in a drive-mode direction,
   b) amplifying and feeding back the drive signal to stimulate anti-phase drive-mode movements of the proof masses (2.1, 2.2),
   c) detecting a sense-mode signal generated by at least two sensing electrode structures, each of the sensing electrode structures having a first electrode element attached to the proof mass and a second electrode element attached to a substrate of the micromechanical device,
   d) demodulating said sense-mode signal from the drive-mode signal for producing a detection signal corresponding to the z-axis rotation.

**Patentansprüche**

1. Mikromechanische Sensorvorrichtung zur Messung einer z-Achsen-Winkelgeschwindigkeit, umfassend:

   a) ein Substrat (1), das eine Substratebene und eine z-Achse senkrecht zur Substratebene definiert,
   b) mindestens zwei Vibrationsstrukturen (2.1, 2.2, 7.1, ....... 7.4), die jeweils mindestens eine Prüfmasse (2.1, 2.2) haben.
   c) eine Aufhängungsstruktur (3.1, 3.2, 4.1, ......., 4.4, 5.1, 5.2, 6.1, ...., 6.8) zum Aufhängen der beiden Vibrationsstrukturen (2.1, 2.2, 7.1, ...... 7.4) über dem Substrat (1), beweglich in Antriebsmodus-Richtung (x-Achse) und in Sense-Modus-Richtung (y-Achse), wobei die Antriebsmodus-Richtung und die Sense-Modus-Richtung parallel zur Substratebene liegen,

d) mindestens eine Kupplungsstruktur (5.1, 5.2, 6.1, ... 6.8), die die beiden Vibrationsstrukturen verbindet (2.1, 2.2, 7.1, ..., 7.4).

e) mindestens eine Kupplungsträgerstruktur (4.1, ......, 4.4), um die Kupplungsstruktur (5.1, 5.2, 6.1, ...... 6.8) mit mindestens einer Verankerungsstruktur (3.1, 3.2) zu verbinden und um eine Dreh-Schwenkbewegung der Kupplungsstruktur (5.1, 5.2) zu ermöglichen, wobei die Dreh-Schwenkbewegung eine Drehachse (z1) hat, die senkrecht zur Substratebene liegt,

f) wobei jede der Vibrationsstrukturen (2.1, 2.2, 7.1, ....., 7.4) zumindest eine Shuttle-Masse (7.1, ..., 7.2) enthält, die mit der mindestens einen Prüfmasse (2.1, 2.2) über Sense-Modus-Federn (8.1, ......, 8.8) verbunden ist, die in Sense-Modus-Richtung flexibler sind, als in Antriebsmodus-Richtung (x), um eine Schwingungsbewegung jeder Vibrationsstruktur (2.1, 2.2, 7.1, ...., 7.4) zu aktivieren,

g) mindestens eine Antriebselektrodenstruktur (9.1, ...., 9.4) für jede Shuttle-Masse (2.1, 2.2) zur Aktivierung von Antriebsmodus-Bewegungen, parallel zur Substratebene,

h) mindestens eine Messelektrodenstruktur (10.1, 10.2) für jede Prüfmasse (2.1, 2.2) zur Erfassung von Sense-Modus-Bewegungen, parallel zur Substratebene,

**dadurch gekennzeichnet, dass**

i) die Kupplungsträgerstruktur (4.1, .... , 4.4) so ausgebildet ist, dass sie auch eine translatorische Bewegung der verbindenden Struktur (5.1 , 5.2, 6.1,... 6.8) in Antriebsmodus-Richtung (x) ermöglicht.

2. Mikromechanische Sensor-Vorrichtung gemäß Anspruch 1, **dadurch gekennzeichnet, dass** die Kupplungsträgerstruktur (4.1, 4.2) so entworfen ist, dass eine gleichphasige Antriebsmodus-Frequenz von einer gegenphasigen Antriebsmodus-Frequenz getrennt wird, ebenso wie eine gleichphasige Sense-Modus-Frequenz von einer gegenphasigen Sense-Modus-Frequenz.

3. Mikromechanische Sensor-Vorrichtung gemäß Anspruch 1, **dadurch gekennzeichnet, dass** die Kupplungsträgerstruktur (4.1, 4.2) eine Federkonstante in Sense-Modus-Richtung hat, die deutlich höher ist, als ihre Federkonstante in Antriebsmodus-Richtung.

4. Mikromechanische Sensor-Vorrichtung gemäß einem der Ansprüche 1 bis 3, **dadurch gekennzeichnet, dass** die Kupplungsträgerstruktur (4.1, 4.2) mindestens zwei Verbindungsbereiche (17.1, 17.2) mit der Kupplungsstruktur (5.1) aufweist, wobei die Verbindungsbereiche (17.1, 17.2) durch einen Abstand (d1) voneinander getrennt sind und wobei die Kupplungsträgerstruktur (4.1, 4.2) so ausgebildet ist, dass dieser Abstand zu einer Frequenzdifferenz zwischen der gleichphasigen Sense-Modus-Frequenz und der gegenphasigen Sense-Modus-Frequenz beiträgt.

5. Mikromechanische Sensor-Vorrichtung gemäß einem der Ansprüche 1 bis 4, **dadurch gekennzeichnet, dass** die Kupplungsträgerstruktur (4.1, 4.2) über eine Antriebsmodus-Richtungs-Flexibilität verfügt, um die translatorische Bewegung in Antriebsmodus-Richtung zu ermöglichen, und dass die Kupplungsträgerstruktur (4.1, 4.2) ausgebildet ist, um eine reduzierte, gleichphasige Antriebsmodus-Frequenz zu erzeugen, wenn die Antriebsmodus-Richtungs-Flexibilität der Kupplungsträgerstruktur (4.1, 4.2) erhöht wird.

6. Mikromechanische Sensor-Vorrichtung gemäß einem der Ansprüche 1 bis 5, **dadurch gekennzeichnet, dass** die Kupplungsträgerstruktur (4.1, 4.2) aus mindestens zwei biegsamen Elementen besteht, die nebeneinander, in einem Abstand zueinander angeordnet sind

7. Mikromechanische Sensor-Vorrichtung gemäß Anspruch 6, **dadurch gekennzeichnet, dass** diese mindestens zwei Elemente gerade Strahle sind.

8. Mikromechanische Sensor-Vorrichtung gemäß einem der Ansprüche 6 bis 7, **dadurch gekennzeichnet, dass** die mindestens zwei biegsamen Elemente einen Abstand d1 zueinander haben, die im Bereich von $0,5 \leq d1/L1 \leq 1,5$ liegt, wobei L1 = Länge des Elementes ist.

9. Mikromechanische Sensor-Vorrichtung gemäß einem der Ansprüche 1 bis 8, **dadurch gekennzeichnet, dass** die Kupplungsstruktur (5.1, 6.1, ..... , 6.4) einen Strahl, der in Antriebsmodus-Richtung (x) verläuft sowie mindestens zwei Antriebsmodus-Federn (6.1, ......, 6.4) umfasst, die den Strahl mit den Shuttle-Massen (7.1, 7.2) verbinden, wobei die Antriebsmodus-Federn (6.1, ....., 6.4), in Antriebsmodus-Richtung biegsamer sind, als in Sense-Modus-Richtung.

10. Mikromechanische Sensor-Vorrichtung gemäß Anspruch 9, **dadurch gekennzeichnet, dass** die Sense-Modus-Federn (8.1, ..... , 8.4) und die Antriebsmodus-Federn (6.1, ......., 6.4), ausgebildet sind, um eine Frequenzdifferenz zwischen der Sense-Modus-Frequenz und der Antriebsmodus-Frequenz zu erzeugen.

11. Mikromechanische Sensor-Vorrichtung gemäß einem der Ansprüche 1 bis 10, **dadurch gekennzeichnet, dass** die Aufhängungsstruktur (3.1, 4.1, 4.2, 5.1, 6.1, ....., 6.4) keine anderen Verankerungen aufweist, als die Verankerungen, mit denen die Kupplungsstruktur (5.1, 5.2, 6.1, ..... , 6.4) über die Kupplungsträgerstruktur (4.1, 4.2) verbunden ist.

12. Mikromechanische Sensor-Vorrichtung gemäß einem der Ansprüche 1 bis 11, **dadurch gekennzeichnet, dass** es eine Antriebselektrodenstruktur (9. 1, 9.2) für jede Shuttle-Masse (7.1, 7.2) gibt, wobei die Antriebselektrodenstruktur (9.1, 9.2) eine erste Elektrode, die mit dem Substrat verbunden ist und eine zweite Elektrode, die mit der Shuttle-Masse (7.1, 7.2) verbunden ist, umfasst, wobei die beiden Elektroden elektrostatische Mittel, zum Schwingen der Antriebsmodus-Masse in Antriebsmodus-Richtung (x-Achse) bilden.

13. Mikromechanische Sensor-Vorrichtung gemäß einem der Ansprüche 1 bis 12, **dadurch gekennzeichnet, dass** die Antriebselektrodenstruktur (9.1, 9.2) in einem Bereich zwischen der Shuttle-Masse (7.1, 7.2) und der Kupplungsstruktur (5.1, 5.2, 6.1, ..... 6.4) in Sense-Modus-Richtung und zwischen den Antriebsmodus-Federn (6.1, .... , 6.4) angeordnet ist, die die Shuttle-Masse (7.1, 7.2) mit der Kupplungsstruktur (5.1, 5.2, 6.1, ..... 6.4) in Antriebsmodus-Richtung verbinden.

14. Mikromechanische Sensor-Vorrichtung gemäß einem der Ansprüche 1 bis 13, **dadurch gekennzeichnet, dass** jede der Sensorelektrodenstrukturen ein erstes Elektrodenelement, das mit dem Substrat verbunden ist und ein zweites Elektrodenelement, das mit der Prüfmasse (2.1, 2.2) verbunden ist, enthält, wobei die beiden Elektrodenelemente dabei angeordnet sind, um elektrische Signale in Reaktion auf eine z-Achsen-Rotation der mikromechanischen Sensorvorrichtung zu erzeugen.

15. Mikromechanische Sensor-Vorrichtung gemäß einem der Ansprüche 1 bis 14, **dadurch gekennzeichnet, dass** mindestens eine der Sensorelektrodenstrukturen (10.2, 10.5) zwischen den Prüfmassen (2.1, 2.2) angeordnet ist.

16. Mikromechanische Sensor-Vorrichtung gemäß Anspruch 15, **dadurch gekennzeichnet, dass** die Verankerung (3.1) der Aufhängungsstruktur in einem Bereich zwischen den Shuttle-Massen, bezogen auf die Antriebsmodus-Richtung (x-Achse), angeordnet ist.

17. Mikromechanische Sensor-Vorrichtung gemäß einem der Ansprüche 1 bis 16, **dadurch gekennzeichnet, dass** die Vibrationsstrukturen (2.1, 2.2, 7.1, ..... , 7.4) und die Aufhängungsstruktur (3.1, 3.2, 4.1, ... 4.4, 5.1, 5.2, 6.1, ..... , 6.8) symmetrisch, bezogen auf die x-Achse und die y-Achse, sind.

18. Verfahren zur Erkennung einer z-Achsen-Rotation mit einer mikromechanischen Sensor-Vorrichtung, wie beansprucht im Anspruch 1, umfassend die folgenden Schritte:

> a) Erzeugung eines Antriebssignals und Anwendung dieses Antriebssignals auf mindestens zwei Shuttle-Massen, die an eine von mindestens zwei Prüfmassen gekoppelt sind, so dass die Prüfmassen (2.1, 2.2) in einer Antriebsmodus-Richtung schwingen,
> b) Verstärkung und Rückeinspeisung des Antriebssignals, um gegenphasige Antriebsmodus-Bewegungen der Prüfmassen (2.1, 2.2) zu stimulieren.
> c) Erkennung eines Antriebssignals, das durch mindestens zwei Sensorelektrodenstrukturen erzeugt wird, wobei jede der Sensorelektrodenstrukturen über ein erstes Elektrodenelement, das mit der Prüfmasse verbunden ist, und über ein zweites Elektrodenelement, das mit einem Substrat der mikromechanischen Vorrichtung verbunden ist, verfügt,
> d) Demodulieren dieses Sense-Modus-Signals vom Antriebssignal zur Erzeugung eines Erkennungssignals, das der z-Achsen-Rotation entspricht.

**Revendications**

1. Dispositif de détection micromécanique destiné à mesurer une vitesse angulaire d'axe z comprenant :

> a) un substrat (1) définissant un plan de substrat et un axe z perpendiculaire au plan de substrat,
> b) au moins deux structures vibratoires (2.1, 2.2, 7.1, ..., 7.4), chacune ayant au moins une masse étalon (2.1, 2.2),
> c) une structure de suspension (3.1, 3.2, 4.1, ..., 4.4, 5.1, 5.2, 6.1, ..., 6.8) pour suspendre les deux structures vibratoires (2.1, 2.2, 7.1, ..., 7.4) au-dessus du substrat (1) en vue d'un déplacement dans une direction de mode entraînement (axe x) et dans une direction de mode détection (axe y), dans lequel la direction de mode entraînement et la direction de mode détection sont parallèles au plan de substrat,
> d) au moins une structure d'accouplement (5.1, 5.2, 6.1, ..., 6.8) reliant les deux structures vibratoires (2.1, 2.2, 7.1, ..., 7.4),

e) au moins une structure de support d'accouplement (4.1, ..., 4.4) reliant la structure d'accouplement (5.1, 5.2, 6.1, ..., 6.8) à au moins une structure d'ancrage (3.1, 3.2) et permettant un déplacement oscillant rotatif de la structure d'accouplement (5.1, 5.2), le déplacement oscillant rotatif ayant un axe de rotation (z1) qui est perpendiculaire au plan de substrat,

f) dans lequel chacune des structures vibratoires (2.1, 2.2, 7.1, ..., 7.4) comprend au moins une masse navette (7.1, ..., 7.4) accouplée à l'au moins une masse étalon (2.1, 2.2) par des ressorts de mode détection (8.1, ..., 8.8), qui sont plus flexibles dans la direction de mode détection que dans la direction de mode entraînement (x), pour activer un déplacement de vibration de chaque structure vibratoire (2.1, 2.2, 7.1, ..., 7.4),

g) au moins une structure d'électrode d'entraînement (9.1, ..., 9.4) pour chaque masse navette (2.1, 2.2) pour activer des déplacements de mode entraînement qui sont parallèles au plan de substrat,

h) au moins une structure d'électrode de détection (10.1, 10.2) pour chaque masse étalon (2.1, 2.2) pour détecter des déplacements de mode détection qui sont parallèles au plan de substrat,

**caractérisé en ce que**

i) la structure de support d'accouplement (4.1, ..., 4.4) est conçue pour permettre également un déplacement de translation de la structure d'accouplement (5.1, 5.2, 6.1, ..., 6.8) dans la direction de mode entraînement (x).

2. Dispositif de détection micromécanique selon la revendication 1, **caractérisé en ce que** la structure de support d'accouplement (4.1, 4.2) est conçue pour séparer une fréquence de mode entraînement en phase d'une fréquence de mode entraînement antiphase ainsi qu'une fréquence de mode détection en phase d'une fréquence de mode détection antiphase.

3. Dispositif de détection micromécanique selon la revendication 1, **caractérisé en ce que** la structure de support d'accouplement (4.1, 4.2) a une constante de rappel dans la direction de mode détection qui est sensiblement supérieure à sa constante de rappel dans la direction de mode entraînement.

4. Dispositif de détection micromécanique selon l'une quelconque des revendications 1 à 3, **caractérisé en ce que** la structure de support d'accouplement (4.1, 4.2) a au moins deux zones de liaison (17.1, 17.2) à la structure d'accouplement (5.1), dans lequel les zones de liaison (17.1, 17.2) sont séparées d'une distance (d1) l'une de l'autre et dans lequel la structure de support d'accouplement (4.1, 4.2) est conçue de telle sorte que ladite distance contribue à une différence de fréquence entre la fréquence de mode détection en phase et la fréquence de mode détection antiphase.

5. Dispositif de détection micromécanique selon l'une quelconque des revendications 1 à 4, **caractérisé en ce que** la structure de support d'accouplement (4.1, 4.2) a une flexibilité dans la direction de mode entraînement pour permettre le déplacement de translation dans la direction de mode entraînement, et **en ce que** la structure de support d'accouplement (4.1, 4.2) est conçue pour produire une fréquence de mode entraînement en phase réduite si la flexibilité dans la direction de mode entraînement de la structure de support d'accouplement (4.1, 4.2) est augmentée.

6. Dispositif de détection micromécanique selon l'une quelconque des revendications 1 à 5, **caractérisé en ce que** la structure de support d'accouplement (4.1, 4.2) est constituée d'au moins deux éléments flexibles agencés côte à côte à une distance l'un de l'autre.

7. Dispositif de détection micromécanique selon la revendication 6, **caractérisé en ce que** les au moins deux éléments flexibles sont des faisceaux rectilignes.

8. Dispositif de détection micromécanique selon l'une quelconque des revendications 6 à 7, **caractérisé en ce que** deux des au moins deux éléments ont une distance d1 l'un par rapport à l'autre qui se trouve dans la plage de $0,5 \leq d1/L1 \leq 1,5$, dans lequel L1-longueur d'élément.

9. Dispositif de détection micromécanique selon l'une quelconque des revendications 1 à 8, **caractérisé en ce que** la structure d'accouplement (5.1, 6.1, ..., 6.4) comprend un faisceau s'étendant dans la direction de mode entraînement (x) et au moins deux ressorts de mode entraînement (6.1, ..., 6.4) reliant le faisceau aux masses navettes (7.1, 7.2), les ressorts de mode entraînement (6.1, ..., 6.4) étant plus flexibles dans la direction de mode entraînement que dans la direction de mode détection.

10. Dispositif de détection micromécanique selon la revendication 9, **caractérisé en ce que** des ressorts de mode détection (8.1, ..., 8.4) et les ressorts de mode entraînement (6.1, ..., 6.4) sont conçus pour générer une différence de fréquence entre la fréquence de mode détection et la fréquence de mode entraînement.

**11.** Dispositif de détection micromécanique selon l'une quelconque des revendications 1 à 10, **caractérisé en ce que** la structure de suspension (3.1, 4.1, 4.2, 5.1, 6.1, ..., 6.4) ne possède aucun autre élément d'ancrage que les éléments d'ancrage auxquels la structure d'accouplement (5.1, 5.2, 6.1, ..., 6.4) est reliée par la structure de support d'accouplement (4.1, 4.2).

**12.** Dispositif de détection micromécanique selon l'une quelconque des revendications 1 à 11, **caractérisé en ce qu'**il y a une structure d'électrode d'entraînement (9.1, 9.2) pour chaque masse navette (7.1, 7.2) dans lequel la structure d'électrode d'entraînement (9.1, 9.2) comprend une première électrode attachée au substrat et une seconde électrode attachée à la masse navette (7.1, 7.2), les deux électrodes formant un moyen électrostatique pour faire vibrer la masse de mode entraînement dans la direction de mode entraînement (axe x).

**13.** Dispositif de détection micromécanique selon l'une quelconque des revendications 1 à 12, **caractérisé en ce que** la structure d'électrode d'entraînement (9.1, 9.2) est agencée dans une zone entre la masse navette (7.1, 7.2) et la structure d'accouplement (5.1, 5.2, 6.1, ..., 6.4) dans la direction de mode détection et entre les ressorts de mode entraînement (6.1, ..., 6.4) reliant la masse navette (7.1, 7.2) à la structure d'accouplement (5.1, 5.2, 6.1, ..., 6.4) dans la direction de mode entraînement).

**14.** Dispositif de détection micromécanique selon l'une quelconque des revendications 1 à 13, **caractérisé en ce que** chacune des structures d'électrode de détection comprend un premier élément d'électrode attaché au substrat et un second élément d'électrode attaché à la masse étalon (2.1, 2.2), les deux éléments d'électrode étant agencés pour générer des signaux électriques en réponse à une rotation d'axe z du dispositif de détection micromécanique.

**15.** Dispositif de détection micromécanique selon l'une quelconque des revendications 1 à 14, **caractérisé en ce qu'**au moins une des structures d'électrode de détection (10.2, 10.5) est agencée entre les masses étalons (2.1, 2.2).

**16.** Dispositif de détection micromécanique selon la revendication 15, **caractérisé en ce que** l'élément d'ancrage (3.1) de la structure de suspension est agencé dans une zone entre les masses navettes par rapport à la direction de mode entraînement (axe x).

**17.** Dispositif de détection micromécanique selon l'une quelconque des revendications 1 à 16, **caractérisé en ce que** les structures vibratoires (2.1, 2.2, 7.1, ..., 7.4) et la structure de suspension (3.1, 3.2, 4.1, .... 4.4, 5.1, 5.2, 6.1, ..., 6.8) sont symétriques par rapport à l'axe x et à l'axe y.

**18.** Procédé pour détecter une rotation d'axe z avec un dispositif de détection micromécanique selon la revendication 1 comprenant les étapes consistant à :

a) générer un signal d'entraînement et appliquer ledit signal d'entraînement à au moins deux masses navettes, chacune des masses navettes étant accouplée à l'une des au moins deux masses étalons, de telle sorte que les masses étalons (2.1, 2.2) vibrent dans une direction de mode entraînement,
b) amplifier et renvoyer le signal d'entraînement afin de stimuler des déplacements de mode entraînement antiphase des masses étalons (2.1, 2.2),
c) détecter un signal de mode détection généré par au moins deux structures d'électrode de détection, chacune des structures d'électrode de détection ayant un premier élément d'électrode attaché à la masse étalon et un second élément d'électrode attaché à un substrat du dispositif micromécanique,
d) démoduler ledit signal de mode détection du signal de mode entraînement pour produire un signal de détection correspondant à la rotation d'axe z.

Fig. 1

**Fig. 2**

**Fig. 3**

**Fig. 4**

Z1

71.2

5.1

17.1

4.1

4.2

L1

w1

3.1

d1

**Fig. 5a**

Z1

**Fig. 5b**

**Fig. 5c**

**Fig. 6a**

18.1

18.2

**Fig. 6b**

19.1

19.2

**Fig. 6c**

20.1

20.2

20.3

**Fig. 6d**

21.1  21.4
21.2  21.3

**Fig. 7a**

5.1a
6.1a  6.4a
7.1a  7.2a
4.1a  4.2a
6.2a  3.1a  6.3a

**Fig. 7b**

5.1a
3.1b
4.1b  4.2b
6.1a
7.1a
4.1a  4.2a
3.1a

**Fig. 7c**

5.1c  22
6.1a
7.1a
4.1c  4.2c
3.1c

**Fig. 8a**

**Fig. 8b**

**Fig. 8c**

**Fig. 9a**

**Fig. 9b**

ROW1 ROW2 ROW3 ROW4

A1

D1

40.1
40.2
40.3

Fig. 10

ROW1 ROW2 ROW3 ROW4

D1

Fig. 12

ROW1  ROW2 / ROW3  ROW4

## Fig. 11a

## Fig. 11b

ROW1　　　　　　　ROW2 / ROW3　　　　　ROW4

| D1 | D1 | D1 | ● D1 |

| M | ○ M |

| D2 | D2 | D2 | D2 |

## Fig. 13a

47

EXCITATION
VOLTAGE

M ○

D1 ●
C2V
ADC　→ (DS)
D2 ◉

46

## Fig. 13b

→ DEMOD → FILTER → PROC

## Fig. 14

**EP 2 746 724 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6230563 B
- US 20100139399 A
- US 20100116050 A
- US 2010313657 A
- US 6718825 B1
- US 6837108 B
- US 7036373 B
- US 6837108 B1
- US 20100186507 A, Günthner
- US 2010313657 A1